# EUROPÄISCHE PATENTSCHRIFT

(11) **EP 3 077 453 B1**
(45) Veröffentlichungstag und Bekanntmachung des Hinweises auf die Patenterteilung: **28.03.2018**
(21) Anmeldenummer: 14808982.4
(22) Anmeldetag: 05.12.2014
(51) Int. Cl.: C08K 5/00, C08K 5/12, C08K 5/1535, C08L 27/06

(54) **WEICHMACHER-ZUSAMMENSETZUNG, DIE TETRAHYDROFURANDERIVATE UND 1,2-CYCLOHEXANDICARBONSÄUREESTER ENTHÄLT**
SOFTENER COMPOSITION WHICH CONTAINS TETRAHYDROFURAN DERIVATIVES AND 1,2-CYCLOHEXANE DICARBOXYLIC ACID ESTERS
COMPOSITION DE PLASTIFIANT QUI CONTIENT DES DÉRIVÉS DU TÉTRAHYDROFURANE ET DE L'ESTER D'ACIDE 1,2-CYCLOHEXANE DICARBOXYLIQUE

(30) Priorität: 06.12.2013 EP 13196036
(43) Veröffentlichungstag der Anmeldung: 12.10.2016
(73) Patentinhaber: BASF SE, 67056 Ludwigshafen am Rhein (DE)
(72) Erfinder: WAGNER, Jochen, 66957 Ruppertsweiler (DE); BREITSCHEIDEL, Boris, 67165 Waldsee (DE); BOHN, Martin Alexander, 68161 Mannheim (DE); BLANK, Benoit, 68535 Edingen-Neckarhausen (DE); KINDLER, Alois, 67269 Grünstadt (DE)
(74) Vertreter: BASF IP Association
(86) Internationale Anmeldenummer: PCT/EP2014/076694
(87) Internationale Veröffentlichungsnummer: WO 2015/082676

(56) Entgegenhaltungen:
- DE-A1-102011 004 676

## Beschreibung

### HINTERGRUND DER ERFINDUNG

Die vorliegende Erfindung betrifft eine Weichmacher-Zusammensetzung, die wenigstens ein Tetrahydrofuranderivat und wenigstens einen 1,2-Cyclohexandicarbonsäureester enthält, Formmassen, die ein thermoplastisches Polymer oder ein Elastomer und eine solche Weichmacher-Zusammensetzung enthalten und die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, d. h. diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglycoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren und eine ebenfalls noch verbesserungswürdige Permanenz auf. Zum Einstellen der gewünschten Weichmacher-Eigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Des Weiteren besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden. Die entsprechenden Niederalkylester besitzen in der Regel schnellgelierende Eigenschaften.

Die WO 00/78704 beschreibt ausgewählte Dialkylcyclohexan-1,3- und 1,4-dicarbonsäureester für die Verwendung als Weichmacher in synthetischen Materialien.

Die US 7,973,194 B1 lehrt die Verwendung von Dibenzylcyclohexan-1,4-dicarboxylat, Benzylbutylcyclohexan-1,4-dicarboxylat und Dibutylcyclohexan-1,4-dicarboxylat als schnellgelierende Weichmacher für PVC.

Einige Dietherderivate von 2,5-Di(hydroxymethyl)tetrahydrofuran sind stofflich bekannt. Die WO 2009/141166 beschreibt eine Kraftstoffzusammensetzung, bestehend aus ringhydrierten Alkylfurfurylethern der allgemeinen Formel R"-TF-CH₂-O-R, worin TF ein 2,5-disubstituierter Tetrahydrofuranring, R eine Hydrocarbylgruppe mit 1 bis 20 C-Atomen, R" eine Methylgruppe, eine Hydroxymethylgruppe sowie das Produkt einer Aldolkondensation repräsentiert oder eine Alkoxymethylgruppe der allgemeinen Formel -CH₂-O-R', worin R' eine Hydrocarbylgruppe mit 1 bis 20 C-Atomen repräsentiert. Konkret werden als Rest R und R' nur Methyl und Ethyl eingesetzt. Dieses Dokument beansprucht die stoffliche Neuheit dieser Verbindungen und beschreibt auch einen Prozess zu deren Herstellung, lehrt jedoch nur deren Einsatz als Kraftstoff oder Kraftstoffadditive und nicht als Weichmacher.

Eine weitere Weichmacherklasse sind die Ester der 2,5-Furandicarbonsäure (FDCA).

Die WO 2012/113608 beschreibt C₅-Dialkylester der 2,5-Furandicarbonsäure und deren Verwendung als Weichmacher. Diese kurzkettigen Ester eignen sich speziell auch zur Herstellung von Plastisolen.

Die WO 2012/113609 beschreibt C₇-Dialkylester der 2,5-Furandicarbonsäure und deren Verwendung als Weichmacher.

Die WO 2011/023490 beschreibt C₉-Dialkylester der 2,5-Furandicarbonsäure und deren Verwendung als Weichmacher.

Die WO 2011/023491 beschreibt C₁₀-Dialkylester der 2,5-Furandicarbonsäure und deren Verwendung als Weichmacher.

R. D. Sanderson et al. (J. Appl. Pol. Sci., 1994, Vol. 53, 1785-1793) beschreiben die Synthese von Estern der 2,5-Furandicarbonsäure und deren Verwendung als Weichmacher für Kunststoffe, insbesondere Polyvinylchlorid (PVC), Polyvinylbutyral (PVB), Polymilchsäure (PLA), Polyhydroxybuttersäure (PHB) oder Polyalkylmethacrylat (P-MA). Konkret werden die Di(2-ethylhexyl)-, Di(2-octyl)-, Dihexyl- und Dibutylester der 2,5-Furandicarbonsäure beschrieben und deren weichmachenden Eigenschaften über dynamisch mechanische Thermoanalysen charakterisiert.

Die US 3,259,636 beschreibt ein Verfahren zur Herstellung von Estern der cis-2,5-Tetrahydrofurandicarbonsäure, bei dem man in einer Eintopfreaktion Wasserstoff, 2,5-Furandicarbonsäure und einen Alkohol in Gegenwart eines Edelmetallkatalysators umsetzt. Es ist weiterhin offenbart, dass sich die Ester von Alkoholen mit sechs oder mehr Kohlenstoffatomen als Weichmacher in Harzzusammensetzungen eignen.

Der vorliegenden Erfindung liegt die Aufgabe zugrunde, eine Weichmacher-Zusammensetzung für thermoplastische Polymere und Elastomere zur Verfügung zu stellen, die einerseits gute thermoplastische Eigenschaften und andererseits gute Geliereigenschaften, d. h. eine niedrige Geliertemperatur, verleiht. Die Weichmacher-Zusammensetzung soll sich dadurch insbesondere zur Bereitstellung von Plastisolen eignen. Die Weichmacher-Zusammensetzung soll eine hohe Verträglichkeit mit dem weichzumachenden Polymer aufweisen, eine hohe Permanenz besitzen und zudem toxikologisch unbedenklich sein.

Diese Aufgabe wird überaschenderweise gelöst durch eine Weichmacher-Zusammensetzung, enthaltend
a) wenigstens eine Verbindung der allgemeinen Formel (I), 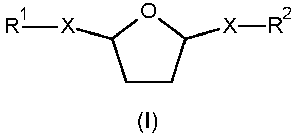 worin
   - X: für *-(C=O)-O-, *-(CH₂)ₙ-O- oder *-(CH₂)ₙ-O-(C=O)- steht, wobei * den Verknüpfungspunkt mit dem Tetrahydrofuranring darstellt und n den Wert 0, 1 oder 2 aufweist;
   und
   - R¹ und R²: unabhängig voneinander ausgewählt sind unter C₄-C₅-Alkyl und C₅-C₆-Cycloalkyl, wobei die Cycloalkylreste unsubstituiert sind oder durch wenigstens einen C₁-C₁₀-Alkylrest substituiert sein können,
b) wenigstens eine Verbindung der allgemeinen Formel (II), 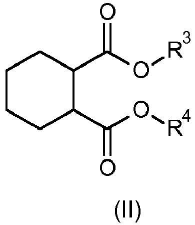 worin
   - R³ und R⁴: unabhängig voneinander ausgewählt sind unter verzweigten und unverzweigten C₇-C₁₂-Alkylresten.

Ein weiterer Gegenstand der Erfindung sind Formmassen, die wenigstens ein thermoplastisches Polymer oder Elastomer und eine Weichmacher-Zusammensetzung, wie zuvor und im Folgenden definiert, enthalten.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung einer Weichmacher-Zusammensetzung, wie zuvor und im Folgenden definiert, als Weichmacher in Plastisolen.

Ein weiterer Gegenstand der Erfindung ist die Verwendung dieser Formmassen zur Herstellung von Formkörpern und Folien.

### BESCHREIBUNG DER ERFINDUNG

Die erfindungsgemäßen Weichmacher-Zusammensetzungen weisen die folgenden Vorteile auf:
- Die erfindungsgemäßen Weichmacher-Zusammensetzungen zeichnen sich durch eine hohe Verträglichkeit mit den weichzumachenden Polymeren, insbesondere PVC, aus.
- Die erfindungsgemäßen Weichmacher-Zusammensetzungen besitzen eine hohe Permanenz und verleihen den weichzumachenden Polymeren trotzdem exzellente Geliereigenschaften.
- Die erfindungsgemäßen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Weichmacher-Zusammensetzung eignet sich in vorteilhafter Weise zur Herstellung von Plastisolen.
- Die in der erfindungsgemäßen Weichmacher-Zusammensetzung enthaltenen Verbindungen (I) eignen sich aufgrund ihrer äußerst niedrigen Lösetemperaturen nach DIN 53408 sehr gut als Schnellgelierer. Um die zum Gelieren eines thermoplastischen Polymers erforderliche Temperatur zu verringern und/oder dessen Geliergeschwindigkeit zu erhöhen, reichen bereits geringe Mengen der Verbindungen (I) in der erfindungsgemäßen Weichmacher-Zusammensetzung aus.
- Die erfindungsgemäßen Weichmacher-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Weichmacher-Zusammensetzungen enthaltenen Verbindungen (I) können leicht zugängliche Edukte verwendet werden. Ein besonderer ökonomischer und ökologischer Vorteil liegt in der Möglichkeit, zur Herstellung der erfindungsgemäß eingesetzten Verbindungen (I) sowohl in großen Mengen zur Verfügung stehender petrochemischer Rohstoffe als auch nachwachsender Rohstoffe nutzen zu können. So sind beispielsweise die Ausgangsstoffe der Furankerne aus natürlich vorkommenden Kohlenhydraten, wie Cellulose und Stärke, erhältlich, wohingegen die zur Einführung der Seitenketten einsetzbaren Alkohole aus großtechnischen Verfahren zur Verfügung stehen. So kann einerseits der Bedarf an "nachhaltigen" Produkten gedeckt werden, anderseits ist aber auch eine wirtschaftliche Herstellung möglich.
- Die Verfahren zur Herstellung der erfindungsgemäß eingesetzten Verbindungen (I) sind einfach und effizient, wodurch diese problemlos in großtechnischem Maßstab bereitgestellt werden können.

Wie zuvor erwähnt wurde überaschenderweise festgestellt, dass die in der erfindungsgemäßen Weichmacher-Zusammensetzung enthaltenen Verbindungen der allgemeinen Formel (I), insbesondere die C₄-C₅-Dialkylester der Tetrahydrofurandicarbonsäure, sehr niedrige Lösetemperaturen sowie exzellente Geliereigenschaften aufweisen. So liegen deren Lösetemperaturen nach DIN 53408 deutlich unter den Lösetemperaturen der entsprechenden Dialkylestern der Phthalsäure und besitzen mindestens ebenbürtige schnellgelierende Eigenschaften.

Es wurde gefunden, dass sich die Verbindungen (I) speziell in Kombination mit 1,2-Cyclohexandicarbonsäureestern der allgemeinen Formel (II) zur Verbesserung des Gelierverhaltens von thermoplastischen Polymeren und Elastomeren eignen. Dabei sind bereits geringe Mengen der Verbindungen (I) in der erfindungsgemäßen Weichmacher-Zusammensetzung ausreichend, um die zum Gelieren erforderliche Temperatur zu verringern und/oder die Geliergeschwindigkeit zu erhöhen.

Im Rahmen der vorliegenden Erfindung wird unter einem Schnellgelierer bzw. "fast fuser" ein Weichmacher verstanden, der eine Lösetemperatur nach DIN 53408 von unter 120 °C aufweist. Solche Schnellgelierer werden insbesondere zur Herstellung von Plastisolen verwendet.

Die in den erfindungsgemäßen Weichmacher-Zusammensetzungen enthaltenen Verbindungen der allgemeinen Formel (I) können sowohl als reine cis-Isomere oder als reine trans-Isomere oder als cis/trans-Isomerengemische vorliegen. Sowohl die reinen Isomere als auch die Isomerengemische beliebiger Zusammensetzung eignen sich in gleichem Maße als Schnellgelierer.

Im Rahmen der vorliegenden Erfindung umfasst der Ausdruck "C₁-C₁₀-Alkyl" geradkettige oder verzweigte C₁-C₁₀-Alkylgruppen. Vorzugsweise handelt es sich dabei um geradkettige oder verzweigte C₁-C₈-Alkylgruppen. Dazu zählen Methyl, Ethyl, Propyl, Isopropyl, n-Butyl, Isobutyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl und dergleichen. Besonders bevorzugt handelt es sich dabei um geradkettige oder verzweigte C₁-C₅-Alkylgruppen.

Der Ausdruck "C₄-C₅-Alkyl" umfasst geradkettige und verzweigte C₄-C₅-Alkylgruppen. Vorzugsweise ist C₄-C₅-Alkyl ausgewählt unter n-Butyl, Isobutyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl und 1-Ethylpropyl. Besonders bevorzugt steht C₄-C₅-Alkyl für n-Butyl, Isobutyl oder n-Pentyl.

Der Ausdruck "C₇-C₁₂-Alkyl" umfasst geradkettige und verzweigte C₇-C₁₂-Alkylgruppen. Vorzugsweise ist C₇-C₁₂-Alkyl ausgewählt unter n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen. Besonders bevorzugt steht C₇-C₁₂-Alkyl für n-Octyl, n-Nonyl, Isononyl, 2-Ethylhexyl, Isodecyl, 2-Propylheptyl, n-Undecyl oder Isoundecyl.

Der Ausdruck "C₅-C₆-Cycloalkyl" umfasst im Sinne der vorliegenden Erfindung cyclische Kohlenwasserstoffe mit 5 bis 6, insbesondere mit 6 Kohlenstoffatomen. Dazu zählen Cyclopentyl oder Cyclohexyl.

Substituierte C₅-C₆-Cycloalkylgruppen können, in Abhängigkeit von ihrer Ringgröße, einen oder mehrere (z. B. 1, 2, 3, 4 oder 5) C₁-C₁₀-Alkylsubstituenten aufweisen. Beispiele für substituierte C₅-C₆-Cycloalkylgruppen sind 2- und 3-Methylcyclopentyl, 2- und 3-Ethylcyclopentyl, 2-, 3- und 4-Methylcyclohexyl, 2-, 3- und 4-Ethylcyclohexyl, 2-, 3- und 4-Propylcyclohexyl, 2-, 3- und 4-Isopropylcyclohexyl, 2-, 3- und 4-Butylcyclohexyl, 2-, 3- und 4-sec.-Butylcyclohexyl und 2-, 3- und 4-tert.-Butylcyclohexyl.

Vorzugsweise weisen die Gruppen X in den Verbindungen der allgemeinen Formel (I) dieselbe Bedeutung auf.

In einer ersten bevorzugten Ausführungsform steht in den Verbindungen der allgemeinen Formel (I) die Gruppen X beide für *-(C=O)-O-.

In einer weiteren bevorzugten Ausführungsform stehen in den Verbindungen der allgemeinen Formel (I) die Gruppen X beide für *-(CH₂)-O-(C=O)-.

In einer weiteren bevorzugten Ausführungsform stehen in den Verbindungen der allgemeinen Formel (I) die Gruppen X beide für *-(CH₂)ₙ-O-, wobei n für 0, 1 oder 2 steht. Besonders bevorzugt steht n für 2.

Bevorzugt stehen in den Verbindungen der allgemeinen Formel (I) die Reste R¹ und R² unabhängig voneinander für einen unverzweigten oder verzweigten C₄-Alkylrest.

Besonders bevorzugt stehen in den Verbindungen der allgemeinen Formel (I) die Reste R¹ und R² unabhängig voneinander für n-Butyl oder Isobutyl.

In einer bevorzugten Ausführung haben in den Verbindungen der allgemeinen Formel (I) die Reste R¹ und R² dieselbe Bedeutung.

Bevorzugte Verbindungen der allgemeinen Formel (I) sind ausgewählt unter Di-(n-butyl)-2,5-tetrahydrofurandicarboxylat, Di-n-butylether von 2,5-Di(hydroxymethyl)tetrahydrofuran, 2,5-Di(hydroxymethyl)tetrahydrofuran-di-n-butanoat, Di-(isobutyl)-2,5-tetrahydrofurandicarboxylat, Di-isobutylether von 2,5-Di(hydroxymethyl)tetrahydrofuran, 2,5-Di(hydroxymethyl)tetrahydrofuran-di-isobutanoat sowie Mischungen aus zwei oder mehr als zwei der zuvor genannten Verbindungen.

Eine besonders bevorzugte Verbindung der allgemeinen Formel (I) ist Di-(n-butyl)-2,5-tetrahydrofurandicarboxylat.

In einer weiteren bevorzugten Ausführungsform haben in den Verbindungen der allgemeinen Formel (II) die Reste R³ und R⁴ dieselbe Bedeutung.

Bevorzugt stehen in den Verbindungen der allgemeinen Formel (II) die Reste R³ und R⁴ beide für 2-Ethylhexyl, beide für Isononyl oder beide für 2-Propylheptyl.

Eine besonders bevorzugte Verbindung der allgemeinen Formel (II) ist Di-(isononyl)-1,2-cyclohexandicarboxylat.

Durch Anpassung der Anteile der Verbindungen (I) und (II) in der erfindungsgemäßen Weichmacher-Zusammensetzung können die Weichmacher-Eigenschaften auf den entsprechenden Verwendungszweck abgestimmt werden. Für den Einsatz in speziellen Anwendungsbereichen kann es gegebenenfalls hilfreich sein der erfindungsgemäßen Weichmacher-Zusammensetzungen weitere von den Verbindungen (I) und (II) verschiedene Weichmacher hinzuzufügen. Aus diesem Grund kann die erfindungsgemäße Weichmacher-Zusammensetzung gegebenenfalls wenigstens einen weiteren von den Verbindungen (I) und (II) verschiedenen Weichmacher enthalten.

Der von den Verbindungen (I) und (II) verschiedene zusätzliche Weichmacher ist ausgewählt unter Phthalsäuredialkylestern, Phthalsäurealkylaralkylestern, von Verbindungen (II) verschiedenen 1,2-Cyclohexandicarbonsäureestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Mono- und Dicarbonsäuren, Estern von ungesättigten Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, von Verbindungen (I) verschiedenen 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

Geeignete Phthalsäuredialkylester, die in vorteilhafter Weise mit den Verbindungen (I) und (II) gemischt werden können, weisen unabhängig voneinander 4 bis 13C-Atome, bevorzugt 8 bis 13C-Atome, in den Alkylketten auf. Ein geeigneter Phthalsäurealkylaralkylester ist beispielsweise Benzylbutylphthalat. Geeignete Terephthalsäuredialkylester weisen bevorzugt unabhängig voneinander jeweils 4 bis 13C-Atome, insbesondere 7 bis 11C-Atome, in den Alkylketten auf. Geeignete von den Verbindungen (II) verschiedenen 1,2-Cyclohexandicarbonsäureester weisen unabhängig voneinander jeweils 3 bis 6C-Atome, bevorzugt 4 bis 6C-Atome, in den Alkylketten auf. Geeignete Terephthalsäuredialkylester sind beispielsweise Di-(n-butyl)-terephthalsäuredialkylester, Di-(2-ethylhexyl)-terephthalsäuredialkylester, Di-(isononyl)-terephthalsäuredialkylester oder Di-(2-propylheptyl)-terephthalsäure-dialkylester. Geeignete Trimellitsäuretrialkylester weisen bevorzugt unabhängig voneinander jeweils 4 bis 13C-Atome, insbesondere 7 bis 11C-Atome, in den Alkylketten auf. Geeignete Benzoesäurealkylester weisen bevorzugt unabhängig voneinander jeweils 7 bis 13 C-Atome, insbesondere 9 bis 13C-Atome, in den Alkylketten auf. Geeignete Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat und Dibutylenglycoldibenzoat. Geeignete Ester von gesättigten Mono- und Dicarbonsäuren sind beispielsweise Ester der Essigsäure, Buttersäure, Valeriansäure, Bernsteinsäure oder Milchsäure sowie die Mono- und Dialkylester der Glutarsäure, Adipinsäure, Sebacinsäure, Äpfelsäure oder Weinsäure. Geeignete Adipinsäuredialkylester weisen bevorzugt unabhängig voneinander jeweils 4 bis 13C-Atome, insbesondere 6 bis 10 C-Atome, in den Alkylketten auf. Geeignete Ester von ungesättigten Dicarbonsäuren sind beispielsweise Ester der Maleinsäure und der Fumarsäure. Geeignete Alkylsulfonsäureester weisen vorzugsweise einen Alkylrest mit 8 bis 22C-Atomen auf. Dazu zählen beispielsweise der Phenyl- oder Cresylester der Pentadecylsulfonsäure. Geeignete Isosorbidester sind Isosorbiddiester, die bevorzugt mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenyl-phosphat. In den Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8C-Atome, insbesondere 6 bis 8C-Atome, auf. Geeignet sind Alkylpyrrolidonderivate mit Alkylresten von 4 bis 18C-Atomen. Geeignete von den Verbindungen (I) verschiedenen 2,5-Tetrahydrofurandicarbonsäuredialkylester weisen unabhängig voneinander jeweils 7 bis 13C-Atome, bevorzugt 8 bis 12C-Atome, in den Alkylketten auf. Geeignete epoxidierte Pflanzenöle sind beispielsweise epoxidierte Fettsäuren aus epoxidertem Sojaöl, z.B. erhältlich von der Firma Galata-Chemicals, Lampertheim, Germany. Epoxidierte Fettsäuremonoalkylester, beispielsweise erhältlich unter dem Handelsnamen reFlex™ der Firma PolyOne, USA, sind auch geeignet. Bei den Polyestern aus aliphatischen und aromatischen Polycarbonsäuren handelt es sich bevorzugt um Polyester der Adipinsäure mit mehrwertigen Alkoholen, insbesondere Dialkylenglycolpolyadipate mit 2 bis 6 Kohlenstoffatomen im Alkylenrest.

In allen zuvor genannten Fällen können die Alkylreste jeweils linear oder verzweigt und jeweils gleich oder verschieden sein. Auf die eingangs gemachten allgemeinen Ausführungen zu geeigneten und bevorzugten Alkylresten wird Bezug genommen.

Der Gehalt des wenigstens einen weiteren von den Verbindungen (I) und (II) verschiedenen Weichmachers in der erfindungsgemäßen Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäße Weichmacher-Zusammensetzung keinen weiteren von den Verbindungen (I) und (II) verschiedenen Weichmacher.

Bevorzugt beträgt der Gehalt an Verbindungen der allgemeinen Formel (I) in der erfindungsgemäßen Weichmacher-Zusammensetzung 1 bis 50 Gew.-%, besonders bevorzugt 2 bis 40 Gew.-% und insbesondere 3 bis 30 Gew.-%, bezogen auf die Gesamtmenge der Verbindungen (I) und (II) in der Weichmacher-Zusammensetzung.

Bevorzugt beträgt der Gehalt der Verbindungen der allgemeinen Formel (II) in der erfindungsgemäßen Weichmacher-Zusammensetzung 10 bis 99 Gew.-%, besonders bevorzugt 50 bis 98 Gew.-% und insbesondere 70 bis 97 Gew.-%, bezogen auf die Gesamtmenge der Verbindungen (I) und (II) in der Weichmacher-Zusammensetzung.

In der erfindungsgemäßen Weichmacher-Zusammensetzung liegt das Gewichtsverhältnis zwischen Verbindungen der allgemeinen Formel (I) und Verbindungen der allgemeinen Formel (11) bevorzugt im Bereich von 1 : 100 bis 1 : 1, besonders bevorzugt im Bereich von 1 : 50 bis 1 : 2 und insbesondere im Bereich von 1 : 30 bis 1 : 2.

### Formmassen

Ein weiterer Gegenstand der vorliegenden Erfindung betrifft eine Formmasse, enthaltend wenigstens ein Polymer und eine Weichmacher-Zusammensetzung wie zuvor definiert.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, (Meth)acrylnitril, α,β-ethyienisch ungesättigten Mono- und Dicarbonsäuren, und Maleinsäureanhydrid;
- Homo- und Copolymere von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Je nachdem welches thermoplastische Polymer oder thermoplastische Polymergemisch in der Formmasse enthalten ist, werden unterschiedliche Mengen Weichmacher eingesetzt. In der Regel beträgt der Gesamtweichmachergehalt in der Formmasse 0,5 bis 300 phr (parts per hundred resin = Gewichtsteile pro hundert Gewichtsteile Polymer), bevorzugt 0,5 bis 130 phr, besonders bevorzugt 1 bis 35 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß weichgemachte PVC meist zwischen 57 und 90, bevorzugt zwischen 61 und 85, insbesondere zwischen 64 und 75.

Im Rahmen der Erfindung liegt der Gehalt an PVC in den erfindungsgemäßen Frommassen bei 20 bis 95 Gew.-%, bevorzugt bei 45 bis 90 Gew.-% und insbesondere bei 50 bis 85 Gew.-%.

Handelt es sich bei dem thermoplastischen Polymer in den erfindungsgemäßen Formmassen um Polyvinylchlorid beträgt der Gesamtweichmachergehalt in der Formmasse 1 bis 300 phr, bevorzugt 5 bis 130 phr, besonders bevorzugt 10 bis 120 phr und insbesondere 15 bis 100 phr.

Ein weiterer Gegenstand der vorliegenden Erfindung betrifft Formmassen, enthaltend wenigstens ein Elastomer und wenigstens eine Weichmacher-Zusammensetzung wie zuvor definiert.

Bevorzugt handelt es bei dem in den erfindungsgemäßen Formmassen enthaltenen Elastomer um wenigstens einen natürlichen Kautschuk (NR), oder wenigstens einen auf synthetischem Wege hergestellten Kautschuk, oder Mischungen davon. Bevorzugte auf synthetischem Wege hergestellte Kautschuke sind beispielsweise PolyisoprenKautschuk (IR), Styrol-Butadien-Kautschuk (SBR), Butadien-Kautschuk (BR), Nitril-Butadien-Kautschuk (NBR) oder Chloropren-Kautschuk (CR).

Bevorzugt sind Kautschuke oder Kautschuk-Mischungen, welche sich mit Schwefel vulkanisieren lassen.

Im Rahmen der Erfindung liegt der Gehalt an Elastomer in den erfindungsgemäßen Formmassen bei 20 bis 95 Gew.-%, bevorzugt bei 45 bis 90 Gew.-% und insbesondere bei 50 bis 85 Gew.-%.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Kautschuke, beträgt der Gehalt der erfindungsgemäßen Weichmacherzusammensetzung, wie oben definiert, in der Formmasse 1 bis 60 phr, bevorzugt 1 bis 40 phr, besonders bevorzugt 2 bis 30 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate, wie Hydrotalcit.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel sollten zwischen den PVC-Pastillen wirksam werden und Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere organische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe, Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren, z. B. UV-Absorber, enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered aminine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z. B. UV-Absorber, von 0,01 bis 7 %, bevorzugt 0,1 bis 5 %, besonders bevorzugt von 0,2 bis 4 % und insbesondere von 0,5 bis 3 % aufweisen.

### Herstellung der Verbindungen der allgemeinen Formel (I)

Im Folgenden wird die Herstellung der in den erfindungsgemäßen Weichmacher-Zusammensetzungen enthaltenen Verbindungen der allgemeinen Formel (I) beschrieben.

Herstellung der Diester der 2,5-Tetrahydrofurandicarbonsäure Verbindungen der allgemeinen Formel (I.1), 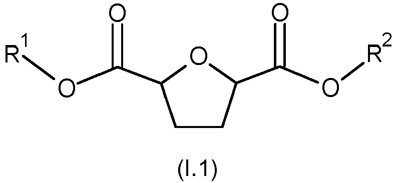 worin R¹ und R² die zuvor genannten Bedeutungen aufweisen, sind erhältlich durch ein Verfahren, bei dem man
a) gegebenenfalls 2,5-Furandicarbonsäure oder ein Anhydrid oder Säurehalogenid davon mit einem C₁-C₃-Alkanol in Gegenwart eines Katalysators unter Erhalt eines Di-(C₁-C₃-Alkyl)-2,5-furandicarboxylats umsetzt,
b1) 2,5-Furandicarbonsäure oder ein Anhydrid oder Säurehalogenid davon oder das in Schritt a) erhaltene Di-(C₁-C₃-Alkyl)-2,5-furandicarboxylat mit wenigstens einem Alkohol R¹-OH und, falls R¹ und R² unterschiedliche Bedeutung haben, zusätzlich mit wenigstens einem Alkohol R²-OH in Gegenwart wenigstens eines Katalysators unter Erhalt einer Verbindung der Formel (I.1a) umsetzt, 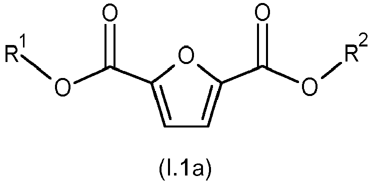
c1) die in Schritt b1) erhaltene Verbindung (I.1a) mit Wasserstoff in Gegenwart wenigstens eines Hydrierkatalysators unter Erhalt der Verbindung der allgemeinen Formel (I.1) hydriert,
   oder
b2) 2,5-Furandicarbonsäure oder das in Schritt a) erhaltene 2,5-Di-(C₁-C₃-Alkyl)-furandicarboxylat mit Wasserstoff in Gegenwart wenigstens eines Hydrierkatalysators unter Erhalt einer Verbindung der allgemeinen Formel (I.1b) hydriert, 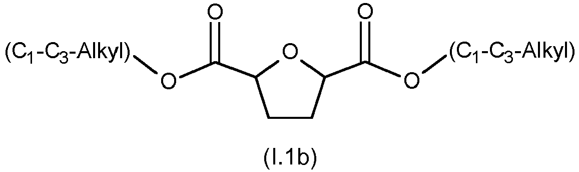
c2) die in Schritt b2) erhaltene Verbindung (I.1b) mit wenigstens einem Alkohol R¹-OH und, falls R¹ und R² unterschiedliche Bedeutung haben, zusätzlich mit wenigstens einem Alkohol R²-OH in Gegenwart eines Katalysators unter Erhalt einer Verbindung der Formel (I.1) umsetzt.

Bezüglich geeigneter und bevorzugter Ausführungsformen der Reste R¹ und R² wird auf die vorherigen Angaben in vollem Umfang Bezug genommen.

Das Verfahren ermöglicht die Herstellung der 2,5-Tetrahydrofurandicarbonsäureester der allgemeinen Formel (I.1) auf zwei verschiedenen Wegen (nachfolgend als Variante 1 und Variante 2 bezeichnet).

Für den Einsatz in Schritt a) geeignete C₁-C₃-Alkanole sind z. B. Methanol, Ethanol, n-Propanol oder Gemische davon.

In Variante 1 des Verfahrens wird die 2,5-Furandicarbonsäure oder das in Schritt a) erhaltene Di-(C₁-C₃-Alkyl)-2,5-furandicarboxylat einer Veresterung bzw. Umesterung mit wenigstens einem Alkohol R¹-OH und, falls R¹ und R² unterschiedliche Bedeutung haben, zusätzlich mit wenigstens einem Alkohol R²-OH zu den Verbindungen der Formel (I.1a) unterzogen, welche anschließend zu Verbindungen der allgemeinen Formel (I.1) hydriert werden (Schritt c1)).

In Variante 2 wird die 2,5-Furandicarbonsäure oder das in Schritt a) erhaltene 2,5-Di-(C₁-C₃-Alkyl)furandicarboxylat zunächst unter Erhalt von 2,5-Tetrahydrofurandicarbonsäure bzw. einer Verbindung der allgemeinen Formel (I.1b) hydriert (Schritt b2)) und das Produkt der Hydrierung anschließend mit wenigstens einem Alkohol R¹-OH und, falls R¹ und R² unterschiedliche Bedeutung haben, zusätzlich mit wenigstens einem Alkohol R²-OH zu den Verbindungen der allgemeinen Formel (I.1) umgesetzt (Schritt c2)).

### Veresterung

Die Überführung der 2,5-Furandicarbonsäure (FDCS) bzw. der 2,5-Tetrahydrofurandicarbonsäure in die entsprechenden Esterverbindungen der allgemeinen Formeln (1.1), (I.1a) und (I.1b) kann nach üblichen dem Fachmann bekannten Verfahren erfolgen. Dazu zählt die Umsetzung wenigstens einer Alkoholkomponente, ausgewählt aus C₁-C₃-Alkanolen oder den Alkoholen R¹-OH bzw. R²-OH, mit FDCS oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure; organische Sulfonsäuren, wie Methansulfonsäure und p-Toluolsulfonsäure; amphotere Katalysatoren, insbesondere Titan-, Zinn (IV)- oder Zirkoniumverbindungen, wie Tetraalkoxytitane, z. B. Tetrabutoxytitan, und Zinn (IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurück führt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der allgemeinen Formel (I.1) mittels Veresterung sind beispielsweise in der US 6,310,235, US 5,324,853, DE-A 2612355 oder DE-A 1945359 beschrieben. Auf die genannten Dokumente wird in vollem Umfang Bezug genommen.

In der Regel erfolgt die Veresterung von FDCS oder der 2,5-Tetrahydrofurandicarbonsäure bevorzugt in Anwesenheit der oben beschriebenen Alkoholkomponenten, mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an FDCS oder 2,5-Tetrahydrofurandicarbonsäure oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt.

Ist der Veresterungskatalysator ausgewählt unter organischen Säuren oder Mineralsäuren, wird die Veresterung üblicherweise in einem Temperaturbereich von 50 bis 160 °C durchgeführt.

Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt erfolgt die Veresterung ohne die Zugabe eines Inertgases.

### Umesterung:

Die Umesterung der Di-(C₁-C₃-Alkyl)-2,5-furandicarboxylate bzw. der Di-(C₁-C₃-Alkyl)-2,5-tetrahydrofurandicarboxylate zu den entsprechenden Esterverbindungen I.1a bzw. I.1 gemäß den Verfahrensschritten b1) und c2) kann nach üblichen dem Fachmann bekannten Verfahren erfolgen. Dazu zählt die Umsetzung der Di-(C₁-C₃)-Alkylester mit wenigstens einem C₄- bis C₅-Alkanol bzw. C₅- bis C₆-Cycloalkanol oder Gemischen davon in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure; organische Sulfonsäuren, wie Methansulfonsäure und p-Toluolsulfonsäure; oder spezielle Metallkatalysatoren aus der Gruppe der Zinn (IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide; aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat; aus der Gruppe der Zirkonkatalysatoren, Zirkonate und Zirkonchelate wie Tetrapropylzirkonat, Tetrabutylzirkonat, Triethanolaminzirkonat; sowie Lithiumkatalysatoren wie Lithiumsalze, Lithiumalkoxide; oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20 °C und 200 °C liegt.

Die Umesterung kann bei Umgebungsdruck oder vermindertem oder erhöhtem Druck erfolgen. Bevorzugt wird die Umesterung bei einem Druck von 0,001 bis 200 bar, besonders bevorzugt 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

In den Schritten 1b) und 2c) erfolgt die Umesterung der Di-(C₁-C₃-Alkyl)-2,5-Furandi-carboxylate bzw. Di-(C₁-C₃-Alkyl)-2,5-Tetrahydrofurandicarboxylate bevorzugt in Anwesenheit der Alkoholkomponente und in Gegenwart wenigstens eines Titan (IV)-Alkoholats. Bevorzugte Titan (IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₃-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200 °C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

### Hydrierung

Zur Durchführung der Hydrierung der Doppelbindungen des Furankerns gemäß den Schritten c1) und b2) stehen dem Fachmann eine Reihe von Verfahren und Katalysatoren zur Verfügung, die beispielsweise auch bei der Hydrierung von Estern aromatischer Polycarbonsäuren wie Phthalaten, Isophthalaten oder Terephthalaten zum Einsatz kommen. Geeignet ist beispielsweise das in der WO 99/032427 beschriebene Kernhydrierungsverfahren. Dieses umfasst eine Hydrierung bei 50 bis 250 °C und einem Druck von 20 bis 300 bar mittels Katalysatoren, die wenigstens ein Metall der VIII. Nebengruppe des Periodensystems der Elemente, beispielsweise Platin, Rhodium, Palladium, Kobalt, Nickel oder Ruthenium, bevorzugt Ruthenium, entweder alleine oder zusammen mit wenigstens einem Metall aus der I. oder VII. Nebengruppe des Periodensystems, wie Kupfer oder Rhenium, abgeschieden auf einem mesoporösen Aluminiumoxid-Trägermaterial mit bimodaler Porenverteilung enthalten. Geeignet ist weiterhin das in der WO 02/100536 beschriebene Kernhydrierungsverfahren. Dieses umfasst eine Hydrierung unter Verwendung eines Rutheniumkatalysators auf amorphem Siliziumdioxid als Träger. Weitere geeignete Verfahren sind in folgenden Dokumenten beschrieben: EP-A 1266882 - Verwendung eines Nickel/Magnesiumoxid auf Kieselgur-Katalysators, WO 03/029181 - Verwendung eines Nickel/Zink auf Siliziumdioxid-Katalysators, WO 03/029168 - Verwendung eines Palladium/ZnO auf Tonerde-Katalysators und eines Ruthenium/ZnO auf α-Al₂O₃-Katalysators oder WO 04/09526 - Verwendung eines Ruthenium auf Titandioxid-Katalysators. Weitere geeignete Katalysatoren sind ebenfalls Raney-Katalysatoren, bevorzugt Raney-Nickel. Neben den bereits erwähnten Trägermaterialien eignen sich beispielsweise auch Zirkondioxid (ZrO₂), sulfatiertes Zirkondioxid, Wolframcarbid (WC), Titandioxid (TiO₂), sulfatierter Kohlenstoff, Aktivkohle, Aluminiumphosphat, Alumosilicate oder phosphatiertes Aluminiumoxid sowie Kombinationen davon.

Die Hydrierung kann in Analogie zu den bekannten Hydrierverfahren zur Hydrierung von organischen Verbindungen, die hydrierbare Gruppen aufweisen, erfolgen. Hierzu wird die organische Verbindung als flüssige Phase oder Gasphase, bevorzugt als flüssige Phase, mit dem Katalysator in Gegenwart von Wasserstoff in Kontakt gebracht. Die flüssige Phase kann z. B. über ein Katalysator-Fließbett (Fließbett-Fahrweise) oder ein Katalysator-Festbett (Festbettfahrweise) geleitet werden.

In der Regel erfolgt die Hydrierung bevorzugt in einem Festbettreaktor.

Die Hydrierung kann sowohl kontinuierlich als auch diskontinuierlich ausgestaltet werden, wobei die kontinuierliche Verfahrensausführung bevorzugt ist. Zur diskontinuierlichen Hydrierung kann eine dafür übliche Reaktionsvorrichtung, z. B. ein Rührreaktor eingesetzt werden. Vorzugsweise führt man die Hydrierung kontinuierlich Festbettreaktoren in der Sumpffahrweise oder Rieselfahrweise durch. Der Wasserstoff kann dabei sowohl im Gleichstrom mit der Lösung des zu hydrierenden Edukts als auch im Gegenstrom über den Katalysator geleitet werden.

Geeignete Apparaturen zur Durchführung einer Hydrierung am Katalysatorfließbett und am Katalysatorfestbett sind im Stand der Technik bekannt, z. B. aus Ullmanns Enzyklopädie der Technischen Chemie, 4. Auflage, Band 13, S. 135 ff., sowie aus P. N. Rylander, "Hydrogenation and Dehydrogenation" in Ullmann's Encyclopedia of Industrial Chemistry, 5th ed. on CD-ROM.

Die Hydrierung erfolgt in der Regel unter erhöhtem Wasserstoffdruck. Bevorzugt ist ein Wasserstoffdruck im Bereich von 2 bis 500 bar, besonders bevorzugt von 10 bis 300 bar.

Die Hydrierung erfolgt bevorzugt in Gegenwart eines unter den Hydrierbedingungen inerten organischen Lösungsmittels. Geeignete Lösungsmittel sind die zuvor bei der Veresterung definierten. Speziell wird ein Ether, wie THF, ein Dialkylenglycol oder ein Mono- oder Diether davon, wie Glyme, eingesetzt.

Die Hydrierung wird bei einer Temperatur in einem Bereich von 20 bis 350 °C, besonders bevorzugt von 50 bis 300 °C, durchgeführt.

Die zur Hydrierung eingesetzte Wasserstoffmenge entspricht in der Regel der 1- bis 15-fachen Menge der zur vollständigen Hydrierung des Furankerns theoretisch erforderlichen, stöchiometrischen Wasserstoffmenge.

In einer bevorzugten Ausführung der Schritte c1) und b2) wird die Hydrierung des Furankerns mit Platin, Rhodium, Palladium, Kobalt, Nickel oder Ruthenium, insbesondere Platin und Palladium, abgeschieden auf Aluminiumoxid, Zirkondioxid, sulfatiertem Zirkondioxid, Zinkoxid oder Siliziumdioxid, insbesondere Zirkondioxid, in Gegenwart eines inerten Lösungsmittels unter 150 bis 300 bar Wasserstoffdruck bei einer Temperatur von 150 bis 250 °C durchgeführt.

Bei den beschriebenen Hydrierverfahren können je nach gewählter Hydrierbedingung, wie Katalysatorzusammensetzung oder der Hydriertemperatur, bevorzugt das cis- oder das trans-Isomer der 2,5-Tetrahydrofurandicarbonsäureester gebildet werden. So lassen sich im Wesentlichen isomerenreine cis- bzw. trans-2,5-Tetrahydrofurandicarbonsäureester generieren, aber auch Mischungen mit unterschiedlich hohen cis- bzw. trans-Isomerenanteilen. Unter im Wesentlichen isomerenrein wird dabei ein Gehalt von wenigstens 95 Gew.-% eines bestimmten Isomers, bezogen auf das Gesamtgewicht des 2,5-Tetrahydrofurandicarbonsäureesters, verstanden.

Die Verbindungen der allgemeinen Formel (I.1) können demnach sowohl als reine cis-Isomere oder als reine trans-Isomere oder als cis/trans-Isomerengemische vorliegen. Sowohl die reinen Isomere als auch die Isomerengemische beliebiger Zusammensetzung eignen sich in gleichem Maße als Schnellgelierer.

In einer besonders geeigneten Ausgestaltung der Verfahrensschritte c1) und b2) wird FDCS bzw. die Ester der 2,5-Furandicarbonsäure aus den Schritten a) und b1) in einem inerten Lösungsmittel gelöst und in Gegenwart eines heterogenen Pd/Pt-Katalysators bei 50 bis 300 bar Wasserstoffdruck und bei 100 bis 250 °C vollständig hydriert. Dabei erfolgt die Hydrierung kontinuierlich in der Festbettfahrweise, wobei der Wasserstoff im Gegenstrom über den Katalysator geleitet wird. Vorzugsweise wird THF als Lösungsmittel sowie ein Pd/Pt-Katalysator auf ZrO₂ eingesetzt. Die Reaktionstemperatur liegt im Bereich von 100 bis 200 °C. Nach dieser Ausgestaltung werden im Allgemeinen die gewünschten Tetrahydrofuranderivate mit einem cis-Isomerenanteil von mindestens 90 Gew.-%, bezogen auf die Gesamtmenge der gebildeten cis/trans-Isomere, erhalten.

Eine besonders geeignete Ausgestaltung des Verfahrens umfasst:
a) Umsetzung von 2,5-Furandicarbonsäure mit Methanol in Gegenwart von konzentrierter Schwefelsäure unter Erhalt des 2,5-Furandicarbonsäuredimethylesters,
2b) Hydrierung des in Schritt a) erhaltenen 2,5-Furandicarbonsäuredimethylesters mit Wasserstoff in Gegenwart eines Pd/Pt-Katalysators auf ZrO₂ unter Erhalt des 2,5- Tetrahydrofurand icarbonsäuredimethylesters,
2c) Umsetzung des in Schritt 2b) erhaltenen 2,5-Tetrahydrofurandicarbonsäuredimethylesters mit wenigstens einem Alkohol R¹-OH in Gegenwart wenigstens eines Titan (IV)-Alkoholats zu den Verbindungen der allgemeinen Formel (I.1).

Herstellung der C₄-C₆-Diether- bzw. C₄-C₆-Diesterderivate der Formel (I.2) bzw. (I.3) Verbindungen der allgemeinen Formel (I.2) oder (I.3), 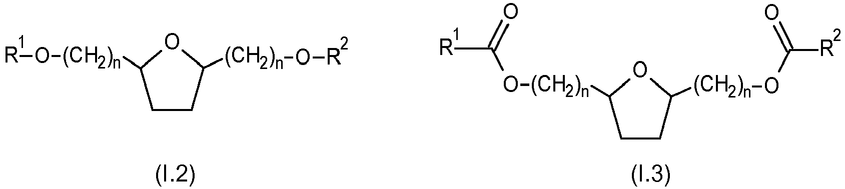 worin R¹ und R² eine der zuvor genannten Bedeutungen und n den Wert 1 oder 2 aufweist, sind erhältlich durch ein Verfahren, bei dem man entweder
a) 2,5-Di-(hydroxymethyl)tetrahydrofuran (n = 1) oder 2,5-Di-(hydroxyethyl)-tetrahydrofuran (n = 2) mit wenigstens einem Alkylierungsreagenz R¹-Z und, falls R¹ und R² unterschiedliche Bedeutung haben, zusätzlich mit wenigstens einem Alkylierungsreagenz R²-Z, wobei Z für eine Abgangsgruppe steht, in Gegenwart einer Base zu Verbindungen der Formel (I.2) umsetzt,
   oder
b) 2,5-Di-(hydroxymethyl)tetrahydrofuran (n = 1) oder 2,5-Di-(hydroxyethyl)-tetrahydrofuran (n = 2) mit wenigstens einem Säurehalogenid R¹-(C=O)X und, falls R¹ und R² unterschiedliche Bedeutung haben, zusätzlich mit wenigstens einem Säurehalogenid R²-(C=O)X, wobei X für Br oder Cl steht, in Gegenwart wenigstens eines tertiären Amins in Verbindungen der Formel (I.3) umgesetzt.

In der Regel wird die Alkylierung in Gegenwart eines unter den Reaktionsbedingungen inerten organischen Lösungsmittels durchgeführt. Geeignete Lösungsmittel sind die zuvor bei der Veresterung genannten. Bevorzugtes Lösungsmittel sind aromatische Kohlenwasserstoffe, wie Toluol.

Die Abgangsgruppe Z steht bevorzugt für einen Rest, der ausgewählt ist unter Br, Cl, der Tosyl-, Mesyl- oder Triflyl-Gruppe.

Besonders bevorzugt steht die Abgangsgruppe Z für Br.

Die Alkylierungsreagenzien R¹-Z bzw. R²-Z sind im Handel erhältlich oder können über geeignete dem Fachmann geläufige Reaktionen oder Verfahrensweisen aus den entsprechenden Alkoholen hergestellt werden. Beispielsweise lassen sich die für dieses Verfahren bevorzugt verwendeten Alkylbromide R¹-Br bzw. R²-Br in bekannter Weise großtechnisch unter Verwendung von Bromwasserstoff (HBr) aus den entsprechenden Alkoholen R¹-OH bzw. R²-OH herstellen.

Als geeignete Basen kommen mineralische und/oder starke organische Basen in Betracht. Dazu gehören z. B. anorganische Basen oder Basenbildner, wie Hydroxide, Hydride, Amide, Oxide und Carbonate der Alkali- und Erdalkalimetalle. Dazu gehören LiOH, NaOH, KOH, Mg(OH)₂, Ca(OH)₂, LiH, NaH, Natriumamid (NaNH₂), Lithiumdiisopropylamid (LDA), Na₂O, K₂CO₃, Na₂CO₃ und Cs₂CO₃; sowie metallorganische Verbindungen wie n-BuLi oder tert.-BuLi. Bevorzugt sind NaOH, KOH, K₂CO₃ und Na₂CO₃.

Die Base wird dabei bevorzugt in einem wenigstens zweifachen stöchiometrischen Überschuss, bezogen auf das 2,5-Di-(hydroxymethyl)tetrahydrofuran bzw. 2,5-Di-(hydroxyethyl)tetrahydrofuran, eingesetzt. Besonders bevorzugt wird ein wenigstens vierfacher stöchiometrischer Überschuss an Base verwendet.

Die Alkylierung kann in Abwesenheit oder in Gegenwart eines organischen Lösungsmittels durchgeführt werden. In der Regel wird die Reaktion in Gegenwart eines inerten organischen Lösungsmittels, wie Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzole, Dibutylether, THF, Dioxan und Mischungen davon, durchgeführt.

Die Alkylierung kann in der Regel bei Umgebungsdruck, vermindertem Druck oder erhöhtem Druck erfolgen. Bevorzugt wird die Alkylierung bei Umgebungsdruck durchgeführt.

Bevorzugt wird die Alkylierung in einem Temperaturbereich von 30 bis 200 °C, bevorzugt 50 bis 150 °C, durchgeführt.

Die Alkylierung kann in Abwesenheit oder in Gegenwart eines Inertgases erfolgen. Bevorzugt wird bei der Alkylierung kein Inertgas eingesetzt.

In einer speziellen geeigneten Ausgestaltung der Alkylierung wird 2,5-Di-(hydroxymethyl)tetrahydrofuran bzw. 2,5-Di-(hydroxyethyl)tetrahydrofuran in Gegenwart eines wenigstens vierfachen Überschusses an Base in einem inerten organischen Lösungsmittel und mit wenigstens einem Alkylbromid R¹-Br bzw. R²-Br in die Dietherverbindungen der allgemeinen Formel (I.2) überführt. Bezüglich der Reste R¹ und R² wird auf die vorherigen Ausführungen Bezug genommen. Bevorzugt wird als Base ein Alkalihydroxid, insbesondere KOH, eingesetzt.

Zur Herstellung der Esterverbindungen der allgemeinen Formel (I.3) wird bevorzugt 2,5-Di-(hydroxymethyl)tetrahydrofuran bzw. 2,5-Di-(hydroxyethyl)tetrahydrofuran mit wenigstens einem Säurehalogenid R¹-(C=O)X und, falls R¹ und R² unterschiedliche Bedeutung haben, mit wenigstens einem Säurehalogenid R²-(C=O)X, wobei X für Br oder Cl steht, in Gegenwart wenigstens eines tertiären Amins, zu den Verbindungen der Formel (I.3) umgesetzt.

Neben diesem Verfahren stehen dem Fachmann noch weitere geläufige Veresterungsmethoden zur Verfügung, wie zuvor im Falle der Veresterung von FDCS bzw. 2,5-Tetrahydrofurandicarbonsäure beschrieben.

Zur Herstellung der Esterverbindungen der allgemeinen Formel (I.3) können üblicherweise alle dem Fachmann geläufige Arten von tertiären Aminen verwendet werden. Beispiele für geeignete tertiäre Amine sind:
- aus der Gruppe der Trialkylamine: Trimethylamin, Triethylamin, Tri-n-propylamin, Diethylisopropylamin, Diisopropylethylamin und dergleichen;
- aus der Gruppe der N-Cycloalkyl-N,N-dialkylamine: Dimethylcyclohexylamin und Diethylcyclohexylam in;
- aus der Gruppe der N,N-Dialkylaniline: Dimethylanilin und Diethylanilin;
- aus der Gruppe der Pyridin- und Chinolinbasen: Pyridin, α-, β- und γ-Picolin, Chinolin und 4-(Dimethylamino)pyridin (DMAP).

Bevorzugte tertiäre Amine sind Trialkylamine und Pyridinbasen, insbesondere Triethylamin und 4-(Dimethylamino)pyridin (DMAP) sowie Gemische davon.

Die Veresterung kann bei Umgebungsdruck, bei vermindertem oder erhöhtem Druck erfolgen. Bevorzugt wird die Veresterung bei Umgebungsdruck durchgeführt.

Die Veresterung kann in Abwesenheit oder in Gegenwart eines organischen Lösungsmittels durchgeführt werden. Bevorzugt wird die Veresterung in Gegenwart eines inerten organischen Lösungsmittels, wie zuvor definiert, durchgeführt.

Die Veresterung wird üblicherweise in einem Temperaturbereich von 50 bis 200 °C durchgeführt.

Die Veresterung kann in Abwesenheit oder in Gegenwart eines Inertgases erfolgen.

In einer bevorzugten Ausgestaltung des Verfahrens zur Herstellung der Verbindungen I.3 wird 2,5-Di-(hydroxymethyl)tetrahydrofuran mit einem Säurechlorid R¹-(C=O)Cl in Gegenwart von Triethylamin und/oder DMAP und eines inerten organischen Lösungsmittels zu Verbindungen der Formel (I.3) umgesetzt.

Zur Herstellung der Verbindungen der allgemeinen Formel (I) werden C₄-C₅-Alkanole sowie C₅-C₆-Cycloalkanole als Edukte verwendet.

Bevorzugte C₄-C₅-Alkanole können geradkettig oder verzweigt sein oder aus Gemischen aus geradkettigen und verzweigten Butanolen bzw. Pentanolen bestehen. Dazu zählen 1-Butanol, 2-Butanol, 2-Methyl-1-propanol, 2-Methyl-2-propanol, 1-Pentanol oder 2-Methylbutanol sowie Gemische davon. Bevorzugt sind 1-Butanol, 2-Methyl-1-propanol oder 1-Pentanol.

Die C₅-C₆-Cycloalkanole sind ausgewählt unter Cyclopentanol oder Cyclohexanol sowie Gemische davon. Bevorzugt ist Cyclohexanol.

Substituierte C₅-C₆-Cycloalkanole können, in Abhängigkeit von ihrer Ringgröße, einen oder mehrere (z. B. 1, 2, 3, 4 oder 5) C₁-C₁₀-Alkylsubstituenten aufweisen. Beispiele für C₅- bis C₆-Cycloalkanole sind 2- und 3-Methylcyclopentanol, 2- und 3-Ethylcyclopentanol, 2-, 3- und 4-Methylcyclohexanol, 2-, 3- und 4-Ethylcyclohexanol, 2-, 3- und 4-Propylcyclohexanol, 2-, 3- und 4-Isopropylcyclohexanol, 2-, 3- und 4-Butylcyclohexanol, 2-, 3- und 4-sec.-Butylcyclohexanol und 2-, 3- und 4-tert.-Butylcyclohexanol.

Die zur Herstellung der Verbindungen der allgemeinen Formel (I) eingesetzte Furan-2,5-dicarbonsäure (FDCS, CAS Nr. 3238-40-2) kann entweder kommerziell erworben oder nach literaturbekannten Synthesewegen hergestellt werden. So finden sich Möglichkeiten zur Synthese in der im Internet veröffentlichten Publikation von Lewkowski et al. mit dem Titel "Synthesis, Chemistry and Application of 5-hydroxymethylfurfural and its derivatives" (Lewkowski et al., ARKIVOC 2001 (i), Seiten 17-54, ISSN 1424-6376). Den meisten dieser Synthesen gemein ist eine säurekatalysierte Umsetzung von Kohlenhydraten, besonders Glucose, Fructose, bevorzugt Fructose zum 5-Hydroxymethylfurfural (5-HMF), welches durch verfahrenstechnische Operationen, wie beispielsweise Zweiphasen-Fahrweise, aus dem Reaktionsgemisch abgetrennt werden kann. Entsprechende Ergebnisse wurden beispielsweise von Leshkov et al. in Science 2006, Vol. 312, Seiten 1933-1937 und von Zhang et al. in Angewandte Chemie 2008, Vol. 120, Seiten 9485-9488 beschrieben. In einem weiteren Schritt kann die 5-HMF dann zu FDCS oxidiert werden, wie beispielsweise von Christensen in ChemSusChem 2007, Vol. 1, Seiten 75-78 zitiert.

2,5-Bis(hydroxymethyl)tetrahydrofuran (CAS Nr. 104-80-3) kann ebenfalls entweder kommerziell erworben oder synthetisiert werden. Die beschriebenen Synthesen erfolgen ausgehend von 5-HMF, welches in zwei Schritten über 2,5-Bis(hydroxymethyl)-furan (2,5-BHF) oder direkt zu 2,5-Di(hydroxymethyl)tetrahydrofuran reduziert werden kann (Lewkowski et al., ARKIVOC 2001 (i), Seiten 17-54, ISSN 1424-6376).

2,5-Bis(hydroxyethyl)tetrahydrofuran kann durch Reduktion des 2,5-Furandiessigsäuremethylesters erhalten werden. 2,5-Furandiessigsäuremethylester kann über geeignete dem Fachmann geläufige Reaktionen aus 2,5-Bis(hydroxymethyl)furan (2,5-BHF) synthetisiert werden, wie beispielsweise analog dem von Rau et al. in Liebigs Ann. Chem., Vol. 1984 (8. 1984), Seiten 1504-1512, ISSN 0947-3440, beschriebenen Verfahren. Dabei wird aus 2,5-BHF durch Umsetzung mit Thionylchlorid 2,5-Bis(chlormethyl)furan dargestellt, welches durch Einwirkung von KCN in Benzol in Gegenwart von [18]Krone-6 zu 2,5-Bis(cyanomethyl)furan umgesetzt wird. Das 2,5-Bis(cyanomethyl)furan kann anschließend zur 2,5-Furandiessigsäure verseift und mit Methanol zum Dimethylester verestert werden oder durch Alkoholyse mit Methanol direkt in den 2,5-Furandiessigsäuremethylester überführt werden (Pinner-Reaktion). Der 2,5-Furandiessigsäuremethylester kann dann entweder zuerst zum Tetrahydro-2,5-furan-diessigsäuredimethylester hydriert (analog der Schritte b2) bzw. c1)) oder direkt zu 2,5-Bis(hydroxyethyl)tetrahydrofuran reduziert werden.

Die Darstellung des 2,5-Furandiessigsäuremethylesters kann ebenfalls analog dem von Kern et al. in Liebigs Ann. Chem., Vol. 1985 (6. 1985), Seiten 1168-1174, ISSN 0947-3440, beschriebenen Verfahren erfolgen.

### Verbindungen der allgemeinen Formel (II)

Die Verbindungen der allgemeinen Formel (II) können entweder kommerziell erworben oder nach im Stand der Technik bekannten Verfahren hergestellt werden.

In der Regel werden die 1,2-Cyclohexandicarbonsäureester meist durch Kernhydrierung der entsprechenden Phthalsäureester erhalten. Die Kernhydrierung kann wie zuvor erwähnt nach dem in der WO 99/32427 beschriebenen Verfahren erfolgen. Ein besonders geeignetes Kernhydrierungsverfahren beschreibt beispielsweise auch die WO 2011082991 A2.

Des Weiteren können 1,2-Cyclohexandicarbonsäureester durch Veresterung von 1,2-Cyclohexandicarbonsäure oder geeigneten Derivaten davon mit den entsprechenden Alkoholen erhalten werden. Die Veresterung kann nach üblichen dem Fachmann bekannten Verfahren erfolgen.

Den Verfahren zur Herstellung der Verbindungen der allgemeinen Formel (II) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₇-C₁₂-Alkanolen als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₇-C₁₂-Alkanole, die zur Herstellung der in der erfindungsgemäßen Weichmacher-Zusammensetzung enthaltenen Verbindungen (II) eingesetzt werden, können geradkettig oder verzweigt sein oder aus Gemischen aus geradkettigen und verzweigten C₇-C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugte C₇-C₁₂-Alkanole sind 2-Ethylhexanol, Isononanol und 2-Propylheptanol, insbesondere Isononanol.

### Heptanol

Die zur Herstellung der Verbindungen der allgemeinen Formel (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligand-modifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den NickelkomplexKatalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formel (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolithe oder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formel (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formel (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-E thyl-4-methyl hexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGAS®-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
   mit der Maßgabe, dass sich die Gesamtsumme der genannten Komponenten 100 Gew.-% ergibt.

### Decanol

Bei Isodecanol, welches zur Synthese der in der erfindungsgemäßen Weichmacher-Zusammensetzung enthaltenen Diisodecylester der allgemeinen Formel (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-lsopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methylhexanol und 0,1 bis 2 Gew.-% 2-Propyl-5-methylhexanol und 0,01 bis 1 Gew.-% 2-lsopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formel (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇-bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formel (II) verwendet werden.

### Plastisolanwendungen

Wie bereits dargelegt eignet sich die erfindungsgemäße Weichmacher-Zusammensetzung aufgrund ihrer guten Geliereigenschaften insbesondere zur Herstellung von Plastisolen.

Ein weiterer Gegenstand der Erfindung betrifft daher die Verwendung einer Weichmacher-Zusammensetzung, wie zuvor definiert, als Weichmacher in einem Plastisol.

Plastisole können aus verschiedenen Kunststoffen hergestellt werden. Bei den erfindungsgemäßen Plastisolen handelt es sich in einer bevorzugten Ausführungsform um ein PVC-Plastisol.

Der Anteil an erfindungsgemäßer Weichmacher-Zusammensetzung in den PVC-Plastisolen beträgt üblicherweise 5 bis 300 phr, bevorzugt 50 bis 200 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

PVC-Plastisole eignen sich insbesondere zur Herstellung für PVC-Folien, für die Herstellung von nahtlosen Hohlkörpern, Handschuhen und zur Anwendung im Textilbereich, wie z. B. für Textilbeschichtungen.

Speziell eignen sich die PVC-Plastisole auf Basis der erfindungsgemäßen Weichmacher-Zusammensetzung zur Produktion von künstlichem Leder, z.B. von künstliches Leder für den Kraftfahrzeugbau; Unterbodenschutz für Kraftfahrzeuge; Nahtabdichtungen; Teppichrückseitenbeschichtungen; schwere Beschichtungen; Förderbänder; Tauchbeschichtungen und mittels Tauchverfahren hergestellte Artikel; Spielzeug, wie Puppen, Bälle oder Spielzeugtiere; anatomische Modelle für die Ausbildung; Bodenbeläge; Wandbeläge; (beschichtete) Textilien, wie Latex-Kleidung, Schutzbekleidung oder Regenkleidung, wie Regenjacken; Planen; Zelte; Bandbeschichtungen; Dachbahnen; Dichtungsmassen für Verschlüsse; Atemmasken und Handschuhe.

### Anwendungen Formmasse

Die erfindungsgemäße Formmasse wird bevorzugt für die Herstellung von Formkörpern und Folien verwendet. Dazu gehören insbesondere Gehäuse von Elektrogeräten, wie beispielsweise Küchengeräten und Computergehäuse; Werkzeuge; Apparate; Rohrleitungen; Kabel; Schläuche, wie beispielsweise Kunststoffschläuche, Wasser- und Bewässerungsschläuche, Industrie-Gummischläuche oder Chemieschläuche; Draht-Ummantelungen; Fensterprofile; Komponenten für den Fahrzeugbau, wie beispielsweise Karosseriebestandteile, Vibrationsdämpfer für Motoren; Reifen; Möbel, wie beispielsweise Stühle, Tische oder Regale; Schaumstoff für Polster und Matratzen; Dichtungen; Verbundfolien, wie Folien für Verbundsicherheitsglas, insbesondere für Fahrzeug- und Fensterscheiben; Schallplatten; Verpackungsbehälter; Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsohlen, Bälle, Luftmatratzen oder Trinkflaschen.

Bei der Bekleidung, die aus den erfindungsgemäßen Formmassen hergestellt werden können, handelt es sich beispielsweise um Gummistiefel.

### Nicht-PVC-Anwendungen

Daneben beinhaltet die vorliegende Erfindung die Verwendung der erfindungsgemäßen Weichmacher-Zusammensetzung als Hilfsmittel oder/und in Hilfsmitteln, ausgewählt unter: Kalandrierhilfsmitteln; Rheologiehilfsmitteln; oberflächenaktive Zusammensetzungen wie Fließ-, Filmbildehilfen, Entschäumern, Schaumverhütern, Benetzungsmitteln, Koaleszenzmitteln und Emulgatoren; Schmierstoffen, wie Schmierölen, Schmierfetten und Schmierpasten; Quenchern für chemische Reaktionen; Phlegmatisierungsmitteln; pharmazeutischen Produkten; Weichmachern in Klebstoffen; Schlagzähmodifizierern und Stellmitteln.

Die Erfindung wird anhand der im Folgenden beschriebenen Figuren und der Beispiele näher erläutert. Dabei sollen die Figuren und Beispiele nicht als einschränkend für die Erfindung verstanden werden.

In den nachfolgenden Beispielen und Figuren werden folgende Abkürzungen verwendet:
2,5-FDCS für 2,5-Furandicarbonsäure,
2,5-THFDCS für 2,5-Tetrahydrofurandicarbonsäure,
DINP für Diisononylphthalat,
DMAP für 4-Dimethylaminopyridin,
TBME für tert-Butylmethylether,
THF für Tetrahydrofuran,
phr für Gewichtsteile pro 100 Gewichtsteile Polymer.

### FIGURENBESCHREIBUNG

Figur 1:

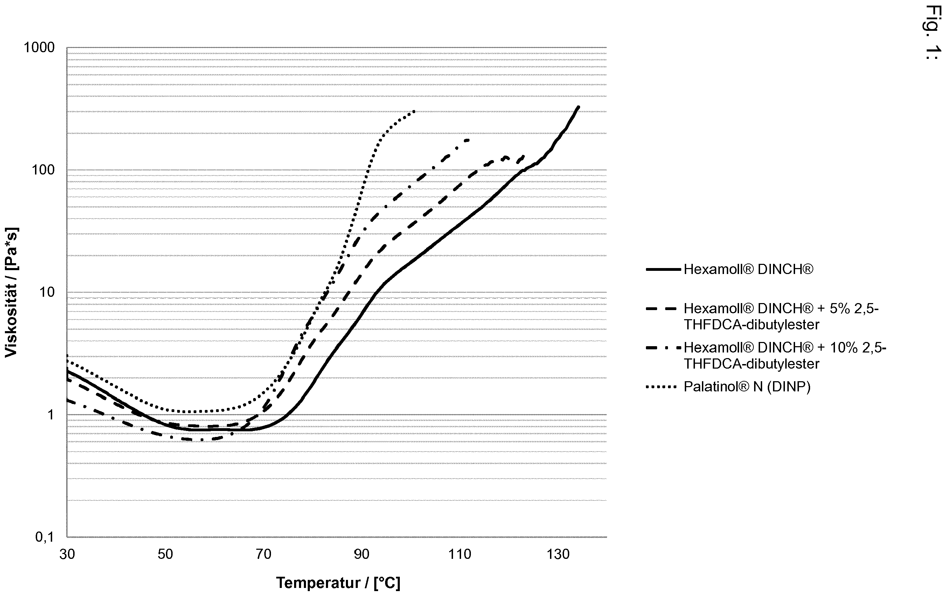

   Figur 1 zeigt das Gelierverhalten von PVC-Plastisolen mit einem Gesamtanteil an erfindungsgemäßer Weichmacher-Zusammensetzung von jeweils 60 phr. Dabei wurden erfindungsgemäße Weichmacher-Zusammensetzungen verwendet, die den kommerziell erhältlichen Weichmacher Hexamoll® DINCH® und unterschiedliche Mengen des Schnellgelierers 2,5-THFDCS-dibutylester enthalten. Zusätzlich ist als Vergleich das Gelierverhalten von PVC-Plastisolen dargestellt, die ausschließlich die kommerziell erhältlichen Weichmacher Hexamoll® DINCH® oder Palatinol® N (DINP) enthalten. Dargestellt ist die Viskosität der Plastisole in Abhängigkeit der Temperatur.

### BEISPIELE

### I) Herstellungsbeispiele erfindungsgemäß eingesetzter Verbindungen (I):

### Beispiel 1

### Synthese von Di-(n-butyl)-2,5-tetrahydrofurandicarboxylat aus Dimethyl-2,5-furan-dicarboxylat durch Umesterung und Hydrierung

### Beispiel 1.1:

### Herstellung von Dimethyl-2,5-furandicarboxylat (= Schritt a)

3,30 kg Methanol wurden zusammen mit 0,10 kg konzentrierter Schwefelsäure in einem 10 L Glasreaktor, ausgestattet mit Heizmantel, Rückflusskühler und mechanischem Rührer, vorgelegt. Dazu wurden unter heftigem Rühren 1,6 kg 2,5-Furandicarbonsäure (2,5-FDCS) langsam zugegeben. Die sich bildende dichte weiße Suspension wurde anschließend auf 70 °C (Rückfluss) erhitzt. Der Reaktionsverlauf wurde mittels HPLC-Analyse verfolgt, wobei man nach etwa 20 h eine klare Lösung unter vollständigem Umsatz der 2,5-FDCS erhielt. Daraufhin wurde die Reaktionsmischung auf 65 °C abgekühlt und mit gesättigter NaHCO₃-Lösung und festem NaHCO₃ neutralisiert (pH 7). Während der Neutralisation bildete sich erneut eine dichte weiße Suspension, die auf 10 °C abgekühlt, für weitere 0,5 h gerührt wurde und anschließend über eine P2 gesinterte Glasfritte abfiltriert wurde. Der Filterkuchen wurde dreimal mit 1 L kaltem Wasser gewaschen, worauf ungefähr 2 kg nasser Feststoff erhalten wurde.

Zur Reinigung und Umkristallisation wurde der nasse Feststoff in einem 10 L Glasreaktor, ausgestattet mit Heizmantel, Rückflusskühler und mechanischem Rührer, zu 6,00 kg 2-Butanon zugegeben. Die Suspension wurde auf 70 °C erhitzt, worauf eine klare Lösung erhalten wurde. Anschließend wurde 1,00 kg Wasser hinzugegeben, was zur Bildung einer braun-orangen wässrigen Phase führte. Gegebenenfalls war die Zugabe von 900 mL gesättigter Kochsalzlösung nötig, um eine Phasentrennung zu erreichen. Die wässrige Phase wurde entfernt und die organische Phase ohne Rühren auf 20 °C abgekühlt, worauf die Kristallisation des Produktes einsetzte (üblicherweise bei etwa 35 °C). Die kristalline Suspension wurde dann auf 0 °C abgekühlt und über Nacht gerührt. Anschließend wurde die Suspension über eine P2 gesinterte Glasfritte abfiltriert und der Filterkuchen mit 1 L kaltem Methanol gewaschen. Der feste Rückstand wurde unter Vakuum bei Raumtemperatur getrocknet. Das gewünschte Dimethyl-2,5-furandicarboxylat wurde in einer Ausbeute von 50 bis 60 % und einer Reinheit von >99 % erhalten. Die Identität und Reinheit des finalen Produktes wurde mittels NMR und HPLC ermittelt (HPLC Trennsäule: Varian Polaris 3µ C18-A, 150 x 4,6 mm).

### Beispiel 1.2:

### Katalytische Hydrierung (= Schritt b2)

Eine 20 gew.%-ige Lösung von Dimethyl-2,5-furandicarboxylat in THF wurde in einen stickstoffgefüllten 2,5 L Hastelloy-C Autoklaven der Firma Parr Instrument, bestückt mit einem mechanischen Rührer mit Magnetkupplung, Thermokupplung, Probeentnahmerohr und Stromstörer, gegeben. Anschließend wurden 120 g eines heterogenen Pd/Pt-Katalysators (0,4 Gew.-% Pd / 0,4 Gew.-% Pt auf ZrO₂, hergestellt analog zu DE 4429014, Beispiel 6) zugegeben und die Stickstoffatmosphäre, durch dreimaliges Füllen und Belüften des Autoklaven mit Wasserstoff, gegen eine Wasserstoffatmosphäre ausgetauscht. Der finale Wasserstoffdruck wurde auf 200 bar erhöht und der Autoklav auf 180 °C erhitzt. Der Reaktionsverlauf wurde mittels GC-Analyse verfolgt. Nach vollständigem Umsatz (üblicherweise nach 40 bis 60 Stunden) wurde der Autoklav abgekühlt, belüftet und der Inhalt abfiltriert, um den festen Katalysator zu entfernen. Das im Filtrat befindliche Lösungsmittel wurde anschließend unter reduziertem Druck destillativ entfernt, das zurückgebliebene Rohprodukt in 300 mL tert-Butylmethylether verdünnt und in einen Scheidetrichter überführt. Die organische Phase wurde zweimal mit gesättigter NaHCO₃-Lösung und einmal mit gesättigter Kochsalzlösung gewaschen. Anschließend wurden das Lösungsmittel und andere leichtflüchtige Bestandteile unter reduziertem Druck destillativ entfernt. Das Rohprodukt wurde mittels fraktionierter Destillation gereinigt, worauf Dimethyl-2,5-tetrahydrofurandicarboxylat als farblose bis leicht braune, viskose Flüssigkeit erhalten wurde. Das gewünschte Dimethyl-2,5-tetrahydrofurandicarboxylat konnte dabei in einer Ausbeute von 57 % und einer Reinheit von 98,2 % erhalten werden. Die Identität und Reinheit des Endprodukts wurde mittels NMR- und GC-MS-Analyse ermittelt (GC-Trennsäule: Agilent J&W DB-5, 30 m x 0,32 mm x 1,0 µm).

### Beispiel 1.3:

### Umesterung von Dimethyl-2,5-tetrahydrofurandicarboxylat (= Schritt c2)

In einem 2 L Rundhalskolben, ausgestattet mit einem Tropftrichter mit Druckausgleich, wurden 204 g (1,08 mol, 1,0 Äquivalente) Dimethyl-2,5-tetrahydrofurandicarboxylat in 200 g n-Heptan gelöst und 325 g (4,38 mol, 4,0 Äquivalente) n-Butanol sowie ein gemischter Titan(IV)-Propoxid/Butoxid-Komplex (3 mol-% Titan) zugegeben. Die Mischung wurde unter Rühren 22 Stunden bis zum Rückfluss erhitzt (100 - 126 °C). Der Reaktionsverlauf wurde mittels GC-Analyse verfolgt. Nach vollständigem Umsatz wurde die Reaktionsmischung auf Raumtemperatur abgekühlt, filtriert und das Titan(IV)-Alkoxid durch die Zugabe von 100 mL Wasser hydrolysiert. Die zweiphasige Mischung wurde in einen Scheidetrichter überführt, die wässrige Phase entfernt und die organische Phase einmal mit gesättigter Kochsalzlösung gewaschen. Anschließend wurde das Lösungsmittel und andere leichtflüchtige Bestandteile unter reduziertem Druck destillativ entfernt. Das Rohprodukt wurde mittels fraktionierter Destillation gereinigt, worauf Di-(n-Butyl)-2,5-tetrahydrofurandicarboxylat als klare farblose Flüssigkeit in einer Ausbeute von 72 % und einer Reinheit von 98,3 % erhalten wurde. Die Identität und Reinheit des Endprodukts wurde mittels NMR- und GC-MS-Analyse ermittelt (GC-Trennsäule: Agilent J&W DB-5, 30 m x 0,32 mm x 1,0 µm).

### Beispiel 2

### Synthese von Di-(n-butyl)-2,5-tetrahydrofurandicarboxylat durch direkte Veresterung und Hydrierung

### Beispiel 2.1:

### Herstellung von Di-(n-butyl)-2,5-furandicarboxylat (= Schritt b1)

In einem 2 L Rundhalskolben, ausgestattet mit einem Dean-Stark Wasserabscheider und einem Tropftrichter mit Druckausgleich, wurden 445 g (6,00 mol, 4,0 Äquivalente) n-Butanol in 500 g Toluol vorgelegt. Die Mischung wurde unter Rühren bis zum Rückfluss erhitzt und 234 g (1,50 mol, 1,0 Äquivalente) 2,5-Furandicarbonsäure gefolgt von 11,5 g (0,12 mol, 8 mol-%) 99,9%iger Schwefelsäure in 3 bis 4 Portionen zugegeben, wann immer sich die Umsetzung verlangsamte. Der Reaktionsverlauf wurde anhand der Menge an abgeschiedenem Wasser in der Dean-Stark-Apparatur verfolgt. Nach vollständigem Umsatz wurde dem Reaktionsgemisch eine Probe entnommen und mittels GC analysiert. Die Reaktionsmischung wurde auf Raumtemperatur abgekühlt, in einen Scheidetrichter überführt und zweimal mit gesättigter NaHCO₃-Lösung gewaschen. Die organische Phase wurde mit gesättigter Kochsalzlösung gewaschen, mit wasserfreiem Na₂SO₄ getrocknet und das Lösungsmittel unter reduziertem Druck entfernt. Das Rohprodukt wurde mittels fraktionierter Destillation gereinigt. Das gewünschte Di-(n-butyl)-2,5-furandicarboxylat konnte dabei in einer Ausbeute von 80 % und einer Reinheit von 98,9 % erhalten werden. Die Identität und Reinheit des finalen Produktes wurde mittels NMR- und GC-MS-Analyse ermittelt (GC-Trennsäule: Agilent J&W DB-5, 30 m x 0,32 mm x 1,0 µm oder Ohio Valley OV-1701 60 m x 0,32 mm x 0,25 µm).

### Katalytische Hydrierung (= Schritt c1):

Eine 20%ige Lösung (Gew.-%) von Di-(n-butyl)-2,5-furandicarboxylat in THF wurde in einen stickstoffgefüllten 2,5 L Hastalloy-C Autoklaven der Firma Parr Instrument, bestückt mit einem mechanischen Rührer mit Magnetkupplung, Thermokupplung, Probeentnahmerohr und Stromstörer, gegeben. Anschließend wurden 120 g eines heterogenen Pd/Pt-Katalysators (0,4 Gew.-% Pd/0,4 Gew.-% Pt auf ZrO₂, hergestellt analog zu DE 4429014, Beispiel 6) zugegeben und die Stickstoffatmosphäre dreimal mit einem Überdruck Wasserstoff ausgetauscht. Der finale Wasserstoffdruck wurde auf 200 bar erhöht und der Autoklav auf 180 °C erhitzt. Der Reaktionsverlauf wurde mittels GC-Analyse verfolgt. Nach vollständigem Umsatz (üblicherweise nach 40 bis 60 Stunden) wurde der Autoklav belüftet und der Inhalt abfiltriert, um den festen Katalysator zu entfernen. Das im Filtrat befindliche Lösungsmittel wurde anschließend unter reduziertem Druck destillativ entfernt, das zurückgebliebene Rohprodukt in 300 mL TBME verdünnt und in einen Scheidetrichter überführt. Die organische Phase wurde zweimal mit gesättigter NaHCO₃-Lösung und einmal mit gesättigter Kochsalzlösung gewaschen. Anschließend wurde das Lösungsmittel und andere leichtflüchtige Bestandteile unter reduziertem Druck destillativ entfernt. Das Rohprodukt wurde mittels fraktionierter Destillation gereinigt, worauf Di-(n-butyl)-2,5-tetrahydrofurandicarboxylat als farblose bis leicht braune, viskose Flüssigkeit in einer Ausbeute von 30 % und einer Reinheit von 97,9 % erhalten wurde. Die Identität und Reinheit des finalen Produktes wurde mittels NMR- und GC-MS-Analyse ermittelt (GC-Trennsäule: Agilent J&W DB-5, 30 m x 0,32 mm x 1,0 µm).

### Beispiel 3

### Synthese des Di-n-butylethers von 2,5-Di(hydroxymethyl)tetrahydrofuran

In einem 500 mL Vierhalskolben, ausgestattet mit einem mechanischen Rührer, Tropftrichter, Thermometer und Rückflusskühler, wurden 10,6 g 2,5-Di(hydroxymethyl)-tetrahydrofuran (80 mmol, 1,0 Äquivalent) in 140 ml Toluol gelöst. Dazu wurde bei Raumtemperatur über einen Zeitraum von 30 Minuten und unter ständigem Rühren portionsweise 22,4 g (400 mmol, 5,0 Äquivalente) gepudertes KOH zugegeben. Die Mischung wurde anschließend für 3 bis 4 Stunden unter Rückfluss gerührt. Dann wurden 60,0 g Molekularsieb (3Ä) zugegeben und für eine weitere Stunde unter Rückfluss gerührt, worauf eine cremefarbige Suspension erhalten wurde. Die Mischung wurde auf 90 °C abgekühlt und 28,5 g (208 mmol, 2,6 Äquivalente) 1-Brombutan gelöst in 40 mL Toluol tropfenweise über 1,5 Stunden zugegeben. Der Tropftrichter wurde mit 20 mL Toluol gewaschen und die Waschlösung mit der Reaktionsmischung vereint. Der Reaktionsverlauf wurde mittels GC-Analyse verfolgt. Nach Beendigung der Reaktion (üblicherweise zwischen 40 und 80 Stunden) wurde die Mischung auf Raumtemperatur gekühlt. Die Glasbehältnisse wurden mit TBME gewaschen, mit der Reaktionsmischung vereint und die resultierende weiße Suspension filtriert. Die abfiltrierten Salzrückstände wurden mit TBME gewaschen. Die vereinigten organischen Phasen wurden nacheinander jeweils einmal mit gesättigter Kochsalzlösung, gesättigter Ammoniumchlorid-Lösung und wieder mit gesättigter Kochsalzlösung gewaschen und schließlich über Na₂SO₄ getrocknet. Anschließend wurde das Lösungsmittel und andere leichtflüchtige Bestandteile unter reduziertem Druck destillativ entfernt und der Rückstand am Hochvakuum getrocknet. Das Rohprodukt wurde mittels fraktionierter Destillation gereinigt, worauf der Di-n-butylether von 2,5-Di(hydroxymethyl)tetrahydrofuran als klare farblose Flüssigkeit in einer Ausbeute von 55 % und einer Reinheit von 98,7 % erhalten wurde. Die Identität und Reinheit des finalen Produkts wurde mittels NMR- und GC-MS-Analyse ermittelt (GC-Trennsäule: Agilent J&W DB-5, 30 m x 0,32 mm x 1,0 µm).

### II) Anwendungstechnische Prüfungen:

### II.a) Bestimmung der Lösetemperatur nach DIN 53408:

Zur Charakterisierung des Gelierverhaltens der erfindungsgemäß eingesetzten Verbindungen (I) in PVC wurde die Lösetemperatur nach DIN 53408 bestimmt. Nach DIN 53408 wird ein Tropfen einer Aufschlämmung von 1 g PVC in 19 g Weichmacher unter einem mit einem heizbaren Mikroskoptisch ausgestatteten Mikroskop im durchscheinenden Licht beobachtet. Die Temperatur wird dabei ab 60 °C linear um 2 °C pro Minute erhöht. Als Lösetemperatur gilt die Temperatur, bei welcher die PVC-Teilchen unsichtbar werden, d. h. deren Konturen und Kontraste nicht mehr zu erkennen sind. Je niedriger die Lösetemperatur, desto besser ist das Gelierverhalten der betreffenden Substanz für PVC.

In der nachfolgenden Tabelle sind die Lösetemperaturen des Weichmachers Di(n-butyl)-2,5-tetrahydrofurandicarboxylat und als Vergleich von Mesamoll® TP-LXS 5106 sowie von Dibutylphthalat aufgeführt.

| Bsp.-Nr. | Substanz | Lösetemperatur nach DIN 53408 |
|---|---|---|
| | | [°C] |
| 1 | Di(n-butyl)-2,5-tetrahydrofurandicarboxylat | 71 |
| V1 | Mesamoll® TP-LXS 51067¹) | 114 |
| V2 | Dibutylphthalat²) | 100 |

| | | |
|---|---|---|
| 1) Mischung von Alkylsulfonsäurephenylestern der Lanxess Deutschland GmbH (CAS Nr. 91082-17-6) 2) Benzol-1,2-dicarbonsäure-di(n-butyl)ester (CAS Nr. 84-74-2) | | |

Wie aus der Tabelle ersichtlich, zeigt Di(n-butyl)-2,5-tetrahydrofurandicarboxylat die niedrigste Lösetemperatur.

### II.b) Physikalische Kenndaten:

In der nachfolgenden Tabelle sind die wesentlichsten physikalischen Kenndaten von Di(n-butyl)-2,5-tetrahydrofurandicarboxylat (Beispiel 1) im Vergleich zu dem am Markt verwendeten Weichmachers Mesamoll® TP-LXS 51067 (Vergleichsbeispiel V1) aufgeführt.

| Weichmacher: | Di(n-butyl)-2,5-tetrahydrofurandicarboxylat | Mesamoll® TP-LXS 51067 |
|---|---|---|
| Dichte (20 °C) [g/cm3] | 1,048 | 1,071 |
| Viskosität (20 °C) [mPa·s] | 10 | 90 |

Von den physikalischen Eigenschaften sind neben der Lösetemperatur nach DIN 53408 speziell die Dichte und Viskosität für die Anwendung als Weichmacher relevant. Im Vergleich mit dem kommerziell erhältlichen und hinsichtlich seinen Eigenschaften als günstig bewerteten Weichmacher Mesamoll® TP-LXS 51067 zeigt der 2,5-THFDCS-Dibutylester eine deutlich niedrigere und damit günstigere Viskosität bei vergleichbarer Dichte.

### II.c) Bestimmung des Gelierverhaltens von PVC-Plastisolen:

Zur Untersuchung des Gelierverhaltens von PVC-Plastisolen auf Basis der erfindungsgemäßen Weichmacher-Zusammensetzungen wurden PVC-Plastisole, die den kommerziell erhältlichen Weichmacher Hexamoll® DINCH® und unterschiedliche Mengen des Schnellgelierers 2,5-THFDCS-dibutylester (5 bis 10 Gew.-%, bezogen auf die eingesetzte Weichmacher-Zusammensetzung) enthalten, nach folgender Rezeptur hergestellt:

| Additiv | phr |
|---|---|
| Solvin 372 NF³) | 100 |
| Erfindungsgemäße Weichmacher-Zusammensetzung | 60 |
| Reagens SLX 781⁴) | 2 |

| | |
|---|---|
| 3) kommerziell erhältliches PVC der Firma Solvin GmbH & Co. KG, hergestellt durch Suspensionspolymerisation (K-Wert nach ISO 1628-2: 73) 4) flüssiger Ba-Zn-Stabilisator der Firma Reagens Deutschland GmbH | |

Als Vergleich wurden zudem Plastisole hergestellt, die ausschließlich die kommerziell erhältlichen Weichmacher Hexamoll® DINCH® oder Palatinol® N (DINP) enthalten.

Die Herstellung der Plastisole erfolgte in der Weise, dass zu der eingewogenen Mischung aus der erfindungsgemäßen Weichmacher-Zusammensetzung und Thermostabilisator unter Rühren mittels Dissolver bei ca. 800 Umdrehungen/Minute das PVC zugegeben wurde. Nach Beendigung der PVC-Zugabe wurde die Mischung für 2,5 Minuten bei 2500 Umdrehungen/Minute homogenisiert und anschließend in einem Exsikkator unter Vakuum entlüftet.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schneller geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgt nach interner Methode mit einem Rheometer MCR101 der Firma Anton Paar. Gemessen wird hierbei die Viskosität der Paste unter Aufheizen bei konstanter Scherung (Rotation). Die Messung erfolgt mit einem Platte/Platte-System (PP50) beginnend bei 30 °C unter einer Scherrate von 10 1/s und einer Aufheizrate von 5 °C/Minute.

Im Allgemeinen nimmt die Viskosität eines Plastisols mit steigender Temperatur zunächst ab und erreicht ein Minimum. Anschließend steigt die Viskosität wieder an. Die Temperatur am Minimum der Kurve und die Steilheit des Anstiegs nach dem Minimum geben Hinweise auf das Gelierverhalten, d. h. je niedriger die Temperatur am Minimum und je steiler der anschließende Anstieg, desto besser bzw. schneller erfolgt die Gelierung.

Wie in der Figur 1 sehr gut zu erkennen ist, geliert das PVC-Plastisol mit der erfindungsgemäßen Weichmacher-Zusammensetzung im Vergleich zu dem PVC-Plastisol, welches ausschließlich den kommerziell erhältlichen Weichmacher Hexamoll® DINCH® enthält, deutlich schneller und bei wesentlich niedrigeren Temperaturen. Des Weiteren weisen die PVC-Plastisole, welche die erfindungsgemäße Weichmacher-Zusammensetzung enthalten, im ungelierten Zustand, d. h. bei Temperaturen unterhalb der Geliertemperatur, eine deutlich geringere Viskosität auf als ein PVC-Plastisol, welches ausschließlich den kommerziell erhältlichen Weichmacher Palatinol® N (DINP) enthält.

## Patentansprüche

1. Weichmacher-Zusammensetzung, enthaltend
a) wenigstens eine Verbindung der allgemeinen Formel (I), 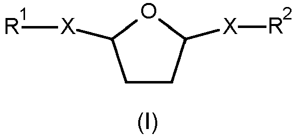 worin
X für *-(C=O)-O-, *-(CH₂)ₙ-O- oder *-(CH₂)ₙ-O-(C=O)- steht, wobei * den Verknüpfungspunkt mit dem Tetrahydrofuranring darstellt und n den Wert 0, 1 oder 2 aufweist;
und
R¹ und R² unabhängig voneinander ausgewählt sind unter C₄-C₅-Alkyl und C₅-C₆-Cycloalkyl, wobei die Cycloalkylreste unsubstituiert sind oder durch wenigstens einen C₁-C₁₀-Alkylrest substituiert sein können,
b) wenigstens eine Verbindung der allgemeinen Formel (II), 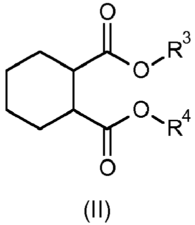 worin
R³ und R⁴ unabhängig voneinander ausgewählt sind unter verzweigten und unverzweigten C₇-C₁₂-Alkylresten.

2. Weichmacher-Zusammensetzung nach Anspruch 1, wobei in den Verbindungen der allgemeinen Formel (I) R¹ und R² unabhängig voneinander für einen unverzweigten oder verzweigten C₄-Alkylrest stehen.

3. Weichmacher-Zusammensetzung nach einem der vorangehenden Ansprüche, wobei in den Verbindungen der allgemeinen Formel (I) R¹ und R² beide für n-Butyl oder beide für Isobutyl stehen.

4. Weichmacher-Zusammensetzung nach einem der vorangehenden Ansprüche, wobei in den Verbindungen der allgemeinen Formel (I) die Gruppe X beide für *-(C=O)-O- steht.

5. Weichmacher-Zusammensetzung nach einem der vorangehenden Ansprüche, wobei in den Verbindungen der allgemeinen Formel (II) R³ und R⁴ beide für 2-Ethylhexyl, beide für Isononyl oder beide für 2-Propylheptyl stehen.

6. Weichmacher-Zusammensetzung nach einem der vorangehenden Ansprüche, wobei die Weichmacher-Zusammensetzung gegebenenfalls einen weiteren von den Verbindungen (I) und (II) verschiedenen Weichmacher enthält, der ausgewählt ist unter Phthalsäuredialkylestern, Phthalsäurealkylaralkylestern, von Verbindungen (II) verschiedenen 1,2-Cyclohexandicarbonsäureestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Mono- und Dicarbonsäuren, Estern von ungesättigten Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, von Verbindungen (I) verschiedenen 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

7. Weichmacher-Zusammensetzung nach einem der vorangehenden Ansprüche, wobei der Gehalt an Verbindungen der allgemeinen Formel (I) in der Weichmacher-Zusammensetzung 1 bis 50 Gew.-% beträgt.

8. Weichmacher-Zusammensetzung nach einem der vorangehenden Ansprüche, wobei der Gehalt an Verbindungen der allgemeinen Formel (II) in der Weichmacher-Zusammensetzung 10 bis 99 Gew.-% beträgt.

9. Weichmacher-Zusammensetzung nach einem der vorangehenden Ansprüche, wobei das Gewichtsverhältnis zwischen Verbindungen der allgemeinen Formel (I) und Verbindungen der allgemeinen Formel (II) im Bereich von 1 : 100 bis 1 : 1 liegt.

10. Formmasse, enthaltend wenigstens ein Polymer und eine Weichmacher-Zusammensetzung wie in einem der Ansprüche 1 bis 9 definiert.

11. Formmasse nach Anspruch 10, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, (Meth)acrylnitril, Maleinsäureanhydrid und α,β-ethylenisch ungesättigten Mono- und Dicarbonsäuren,
- Homo- und Copolymeren von Vinylacetalen,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

12. Formmasse nach Anspruch 11, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

13. Formmasse nach einem der Ansprüche 11 oder 12, wobei es sich bei dem thermoplastischen Polymer um Polyvinylchlorid (PVC) handelt.

14. Formmasse nach Anspruch 13, wobei der Gehalt der Weichmacher-Zusammensetzung in der Formmasse 1,0 bis 300 phr beträgt.

15. Formmasse nach einem der Ansprüche 11 oder 12, enthaltend wenigstens ein von Polyvinylchlorid verschiedenes thermoplastisches Polymer, wobei der Gehalt der Weichmacher-Zusammensetzung in der Formmasse 0,5 bis 300 phr beträgt.

16. Formmasse nach Anspruch 10, wobei es sich bei dem Polymer um ein Elastomer handelt, bevorzugt ausgewählt unter natürlichen Kautschuken, synthetischen Kautschuken und Mischungen davon.

17. Formmasse nach Anspruch 16, wobei der Gehalt der Weichmacher-Zusammensetzung in der Formmasse 1,0 bis 60 phr beträgt.

18. Verwendung einer Weichmacher-Zusammensetzung, wie in einem der Ansprüche 1 bis 9 definiert, als Weichmacher für thermoplastische Polymere und Elastomere.

19. Verwendung einer Weichmacher-Zusammensetzung, wie in einem der Ansprüche 1 bis 9 definiert, als Weichmacher in einem Plastisol.

20. Verwendung einer Formmasse, wie in einem der Ansprüche 10 bis 17 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Komponenten für den Fahrzeugbau, Reifen, Möbeln, Schaumstoff für Polster und Matratzen, Planen, Dichtungen, Verbundfolien, Schallplatten, Kunstleder, Verpackungsbehältern, Klebebandfolien oder Beschichtungen.

21. Verwendung einer Formmasse, wie in einem der Ansprüche 10 bis 17 definiert, zur Herstellung von Formkörpern und Folien, die direkt mit Menschen oder Nahrungsmitteln in Kontakt kommen.

22. Verwendung wie in Anspruch 21 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A plasticizer composition comprising
a) at least one compound of the general formula (I), 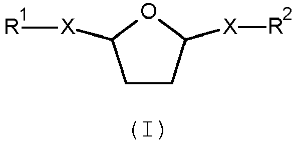 in which
X is *-(C=O)-O-, *-(CH₂)ₙ-O-, or *-(CH₂)ₙ-O-(C=O)-, where * represents the point of linkage to the tetrahydrofuran ring, and n has the value 0, 1, or 2;
and
R¹ and R² are selected mutually independently from C₄-C₅-alkyl and C₅-C₆-cycloalkyl, where the cycloalkyl moieties are unsubstituted or can be substituted by at least one C₁-C₁₀-alkyl moiety,
b) at least one compound of the general formula (II), 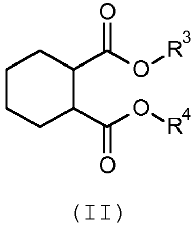 in which
R³ and R⁴ are selected mutually independently from branched and unbranched C₇-C₁₂-alkyl moieties.

2. The plasticizer composition according to claim 1, where R¹ and R² in the compounds of the general formula (I) are mutually independently an unbranched or branched C₄-alkyl moiety.

3. The plasticizer composition according to any of the preceding claims, where both of R¹ and R² in the compounds of the general formula (I) are n-butyl, or both are isobutyl.

4. The plasticizer composition according to any of the preceding claims, where both of the groups X in the compounds of the general formula (I) are *-(C=O)-O-.

5. The plasticizer composition according to any of the preceding claims, where both of R³ and R⁴ in the compounds of the general formula (II) are 2-ethylhexyl or both are isononyl, or both are 2-propylheptyl.

6. The plasticizer composition according to any of the preceding claims, where the plasticizer composition optionally comprises another plasticizer which differs from the compounds (I) and (II) and which is selected from dialkyl phthalates, alkyl aralkyl phthalates, 1,2-cyclohexanedicarboxylic esters differing from compounds (II), dialkyl terephthalates, trialkyl trimellitates, alkyl benzoates, dibenzoic esters of glycols, hydroxybenzoic esters, esters of saturated mono- and dicarboxylic acids, esters of unsaturated dicarboxylic acids, amides and esters of aromatic sulfonic acids, alkylsulfonic esters, glycerol esters, isosorbide esters, phosphoric esters, citric triesters, alkylpyrrolidone derivatives, 2,5-tetrahydro-furandicarboxylic esters which differ from compounds (I), epoxidized vegetable oils, epoxidized fatty acid monoalkyl esters, and polyesters made of aliphatic and/or aromatic polycarboxylic acids with at least dihydric alcohols.

7. The plasticizer composition according to any of the preceding claims, where the content of compounds of the general formula (I) in the plasticizer composition is from 1 to 50% by weight.

8. The plasticizer composition according to any of the preceding claims, where the content of compounds of the general formula (II) in the plasticizer composition is from 10 to 99% by weight.

9. The plasticizer composition according to any of the preceding claims, where the ratio by weight of compounds of the general formula (I) to compounds of the general formula (II) is in the range from 1:100 to 1:1.

10. A molding composition comprising at least one polymer and one plasticizer composition as defined in any of claims 1 to 9.

11. The molding composition according to claim 10, where the polymer is a thermoplastic polymer selected from
- homo- and copolymers which comprise at least one copolymerized monomer selected from C₂-C₁₀-monoolefins, 1,3-butadiene, 2-chloro-1,3-butadiene, vinyl alcohol and its C₂-C₁₀-alkyl esters, vinyl chloride, vinylidene chloride, vinylidene fluoride, tetrafluoroethylene, glycidyl acrylate, glycidyl methacrylate, acrylates and methacrylates of C₁-C₁₀-alcohols, vinylaromatics, (meth)acrylonitrile, maleic anhydride, and α,β-ethylenically unsaturated mono- and dicarboxylic acids,
- homo- and copolymers of vinyl acetals,
- polyvinyl esters,
- polycarbonates,
- polyesters,
- polyethers,
- polyether ketones,
- thermoplastic polyurethanes,
- polysulfides,
- polysulfones,
- polyether sulfones,
- cellulose alkyl esters,
and mixtures thereof.

12. The molding composition according to claim 11, where the thermoplastic polymer is selected from polyvinyl chloride (PVC), polyvinyl butyral (PVB), homo- and copolymers of vinyl acetate, homo- and copolymers of styrene, polyacrylates, thermoplastic polyurethanes (TPU), or polysulfides.

13. The molding composition according to claim 11 or 12, where the thermoplastic polymer is polyvinyl chloride (PVC).

14. The molding composition according to claim 13, where the content of the plasticizer composition in the molding composition is from 1.0 to 300 phr.

15. The molding composition according to claim 11 or 12, comprising at least one thermoplastic polymer which differs from polyvinyl chloride, where the content of the plasticizer composition in the molding composition is from 0.5 to 300 phr.

16. The molding composition according to claim 10, where the polymer is an elastomer, preferably selected from natural rubbers, synthetic rubbers, and mixtures thereof.

17. The molding composition according to claim 16, where the content of the plasticizer composition in the molding composition is from 1.0 to 60 phr.

18. The use of a plasticizer composition as defined in any of claims 1 to 9 as plasticizer for thermoplastic polymers and elastomers.

19. The use of a plasticizer composition as defined in any of claims 1 to 9 as plasticizer in a plastisol.

20. The use of a molding composition as defined in any of claims 10 to 17 for the production of moldings and foils, for example housings of electrical devices, computer housings, tooling, piping, cables, hoses, wire sheathing, window profiles, vehicle-construction components, tires, furniture, cushion foam and mattress foam, tarpaulins, gaskets, composite foils, recording discs, synthetic leather, packaging containers, adhesive-tape foils, or coatings.

21. The use of a molding composition as defined in any of claims 10 to 17 for the production of moldings and foils which come directly into contact with people or with foods.

22. The use as defined in claim 21, where the moldings and foils which come directly into contact with people or foods are medical products, hygiene products, packaging for food or drink, products for the interior sector, toys and child-care items, sports-and-leisure products, apparel, or fibers for textiles.

## Revendications

1. Composition de plastifiant, contenant :
a) au moins un composé de formule générale (I) 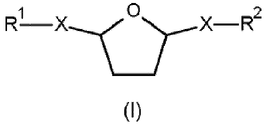 dans laquelle
X représente *-(C=O)-O-, *-(CH₂)ₙ-O- ou *-(CH₂)ₙ-O-(C=O)-, * représentant le point de liaison avec le cycle tétrahydrofurane, et n présentant la valeur 0, 1 ou 2 ;
et
R¹ et R² sont choisis indépendamment l'un de l'autre parmi alkyle en C₄-C₅ et cycloalkyle en C₅-C₆, les radicaux cycloalkyle étant non substitués ou pouvant être substitués par au moins un radical alkyle en C₁-C₁₀,
b) au moins un composé de formule générale (II) 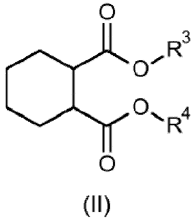 dans laquelle
R³ et R⁴ sont choisis indépendamment l'un de l'autre parmi les radicaux alkyle en C₇-C₁₂ ramifiés et non ramifiés.

2. Composition de plastifiant selon la revendication 1, dans laquelle, dans les composés de formule générale (I), R¹ et R² représentent indépendamment l'un de l'autre un radical alkyle en C₄ non ramifié ou ramifié.

3. Composition de plastifiant selon l'une quelconque des revendications précédentes, dans laquelle, dans les composés de formule générale (I), R¹ et R² représentent tous les deux n-butyle ou tous les deux isobutyle.

4. Composition de plastifiant selon l'une quelconque des revendications précédentes, dans laquelle, dans les composés de formule générale (I), les groupes X représentent tous les deux *-(C=O)-O-.

5. Composition de plastifiant selon l'une quelconque des revendications précédentes, dans laquelle, dans les composés de formule générale (II), R³ et R⁴ représentent tous les deux 2-éthylhexyle, tous les deux isononyle ou tous les deux 2-propylheptyle.

6. Composition de plastifiant selon l'une quelconque des revendications précédentes, dans laquelle la composition de plastifiant contient éventuellement un plastifiant supplémentaire différent des composés (I) et (II), qui est choisi parmi les esters dialkyliques de l'acide phtalique, les esters alkylaralkyliques de l'acide phtalique, les esters de l'acide 1,2-cyclohexane-dicarboxylique différents des composés (II), les esters dialkyliques de l'acide téréphtalique, les esters trialkyliques de l'acide triméllitique, les esters alkyliques de l'acide benzoïque, les esters de l'acide dibenzoïque de glycols, les esters de l'acide hydroxybenzoïque, les esters d'acides mono- et dicarboxyliques saturés, les esters d'acides dicarboxyliques insaturés, les amides et les esters d'acides sulfoniques aromatiques, les esters d'acides alkylsulfoniques, les esters de glycérine, les esters d'isosorbide, les esters de l'acide phosphorique, les triesters de l'acide citrique, les dérivés d'alkylpyrrolidone, les esters de l'acide 2,5-tétrahydrofurane-dicarboxylique différents des composés (I), les huiles végétales époxydées et les esters monoalkyliques d'acides gras époxydés, les polyesters d'acides polycarboxyliques aliphatiques et/ou aromatiques avec des alcools au moins bivalents.

7. Composition de plastifiant selon l'une quelconque des revendications précédentes, dans laquelle la teneur en composés de formule générale (I) dans la composition de plastifiant est de 1 à 50 % en poids.

8. Composition de plastifiant selon l'une quelconque des revendications précédentes, dans laquelle la teneur en composés de formule générale (II) dans la composition de plastifiant est de 10 à 99 % en poids.

9. Composition de plastifiant selon l'une quelconque des revendications précédentes, dans laquelle le rapport en poids entre les composés de formule générale (I) et les composés de formule générale (II) se situe dans la plage allant de 1:100 à 1:1.

10. Matériau de moulage, contenant au moins un polymère et une composition de plastifiant telle que définie dans l'une quelconque des revendications 1 à 9.

11. Matériau de moulage selon la revendication 10, dans lequel le polymère est un polymère thermoplastique, qui est choisi parmi :
- les homo- ou copolymères, qui contiennent au moins un monomère sous forme copolymérisée qui est choisi parmi les monooléfines en C₂-C₁₀, le 1,3-butadiène, le 2-chloro-1,3-butadiène, l'alcool vinylique et ses esters alkyliques en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et les méthacrylates d'alcools en C₁-C₁₀, les composés aromatiques de vinyle, le (méth)acrylonitrile, l'anhydride de l'acide maléique et les acides mono- et dicarboxyliques α,β-éthyléniquement insaturés,
- les homo- et copolymères de vinylacétals,
- les esters de polyvinyle,
- les polycarbonates,
- les polyesters,
- les polyéthers,
- les polyéther-cétones,
- les polyuréthanes thermoplastiques,
- les polysulfures,
- les polysulfones,
- les polyéther-sulfones,
- les esters alkyliques de cellulose,
et leurs mélanges.

12. Matériau de moulage selon la revendication 11, dans lequel le polymère thermoplastique est choisi parmi le polychlorure de vinyle (PVC), le polyvinybutyral (PVB), les homo- et copolymères d'acétate de vinyle, les homo- et copolymères de styrène, les polyacrylates, les polyuréthanes thermoplastiques (TPU) ou les polysulfures.

13. Matériau de moulage selon l'une quelconque des revendications 11 ou 12, dans lequel le polymère thermoplastique est le polychlorure de vinyle (PVC).

14. Matériau de moulage selon la revendication 13, dans lequel la teneur de la composition de plastifiant dans le matériau de moulage est de 1,0 à 300 pce.

15. Matériau de moulage selon l'une quelconque des revendications 11 ou 12, contenant au moins un polymère thermoplastique différent du polychlorure de vinyle, la teneur de la composition de plastifiant dans le matériau de moulage étant de 0,5 à 300 pce.

16. Matériau de moulage selon la revendication 10, dans lequel le polymère est un élastomère, de préférence choisi parmi les caoutchoucs naturels, les caoutchoucs synthétiques et leurs mélanges.

17. Matériau de moulage selon la revendication 16, dans lequel la teneur de la composition de plastifiant dans le matériau de moulage est de 1,0 à 60 pce.

18. Utilisation d'une composition de plastifiant telle que définie dans l'une quelconque des revendications 1 à 9 en tant que plastifiant pour polymères et élastomères thermoplastiques.

19. Utilisation d'une composition de plastifiant telle que définie dans l'une quelconque des revendications 1 à 9 en tant que plastifiant dans un plastisol.

20. Utilisation d'un matériau de moulage tel que défini dans l'une quelconque des revendications 10 à 17 pour la fabrication de corps moulés et de films, tels que par exemple des boîtiers d'appareils électriques, des boîtiers d'ordinateurs, des outils, des canalisations, des câbles, des tuyaux, des enrobages de fils, des profilés de fenêtres, des composants pour la construction de véhicules automobiles, des pneus, des meubles, de la mousse pour rembourrages et matelas, des bâches, des joints, des films composites, des disques, du cuir artificiel, des contenants d'emballage, des films de bande adhésive ou des revêtements.

21. Utilisation d'un matériau de moulage tel que défini dans l'une quelconque des revendications 10 à 17 pour la fabrication de corps moulés et de films qui rentrent en contact direct avec des hommes ou des produits alimentaires.

22. Utilisation telle que définie dans la revendication 21, dans laquelle les corps moulés et les films qui rentrent en contact direct avec des hommes ou des produits alimentaires sont des produits médicaux, des produits d'hygiène, des emballages de produits alimentaires, des produits pour l'intérieur, des jouets et des articles pour le soin des enfants, des produits de sport et de loisir, des habillements ou des fibres pour tissus.
